Europäisches Patentamt

European Patent Office

Office européen des brevets

(19)

(11) **EP 1 179 802 B1**

(12) # EUROPÄISCHE PATENTSCHRIFT

(45) Veröffentlichungstag und Bekanntmachung des Hinweises auf die Patenterteilung:
**29.11.2006 Patentblatt 2006/48**

(51) Int Cl.:
*G06K 9/64* (2006.01)      *G06K 9/62* (2006.01)
*G06K 9/38* (2006.01)

(21) Anmeldenummer: **01890224.7**

(22) Anmeldetag: **02.08.2001**

(54) **Verfahren und Einrichtung zur Erstellung von Korrelations-Bildpunktmengen**

Method and apparatus for producing correlation sets of pixels

Méthode et appareil pour produire des ensembles de corrélations de points d'image

(84) Benannte Vertragsstaaten:
**AT BE CH CY DE DK ES FI FR GB GR IE IT LI LU MC NL PT SE TR**

(30) Priorität: **10.08.2000 AT 13862000**

(43) Veröffentlichungstag der Anmeldung:
**13.02.2002 Patentblatt 2002/07**

(73) Patentinhaber: **Österreichisches Forschungszentrum Seibersdorf Ges.m.b.H.
1010 Wien (AT)**

(72) Erfinder:
- **Penz, Harald, Dr.**
  **1120 Wien (AT)**
- **Krattenthaler, Werner, Dr.**
  **2346 Maria Enzersdorf (AT)**
- **Vrabl, Andreas, Dipl.-Ing.**
  **1100 Wien (AT)**
- **Mayer, Konrad, Dipl.-Ing.**
  **1230 Wien (AT)**

(74) Vertreter: **Wildhack, Helmut Patentanwälte Wildhack-Jellinek, Landstrasser Hauptstrasse 50
1030 Wien (AT)**

(56) Entgegenhaltungen:
**US-A- 3 626 368**      **US-A- 5 243 668**

- **KRATTENTHALER W ET AL: "POINT CORRELATION: A REDUCED-COST TEMPLATE MATCHING TECHNIQUE" PROCEEDINGS OF THE INTERNATIONAL CONFERENCE ON IMAGE PROCESSING (ICIP) AUSTIN, NOV. 13 - 16, 1994, LOS ALAMITOS, IEEE COMP. SOC. PRESS, US, Bd. VOL. 1 CONF. 1, 13. November 1994 (1994-11-13), Seiten 208-212, XP000521960 ISBN: 0-8186-6952-7**
- **JANE YOU ET AL: "A GUIDED IMAGE MATCHING APPROACH USING HAUSDORFF DISTANCE WITH INTERESTING POINTS DETECTION" PROCEEDINGS OF THE INTERNATIONAL CONFERENCE ON IMAGE PROCESSING (ICIP) AUSTIN, NOV. 13 - 16, 1994, LOS ALAMITOS, IEEE COMP. SOC. PRESS, US, Bd. VOL. 1 CONF. 1, 13. November 1994 (1994-11-13), Seiten 968-972, XP000522074 ISBN: 0-8186-6952-7**
- **THEODORIS ET AL: "Pattern Recognition, PASSAGE" PATTERN RECOGNITION, SAN DIEGO, CA : ACADEMIC PRESS, US, 1999, Seiten 154-167, XP002280745 ISBN: 0-12-686140-4**

EP 1 179 802 B1

**EP 1 179 802 B1**

**Beschreibung**

Die Erfindung betrifft ein Verfahren gemäß dem Oberbegriff des Patentanspruches 1. Des weiteren betrifft die Erfindung eine Einrichtung gemäß dem Oberbegriff des Patentanspruches 11.

Aus Krattenthaler W. et al: "Point correlation: a reduced-cost template matching technique" proceedings of the international conference on image processing (ICIP) Austin, Nov. 13 - 16, 1994, Los Alamitos, IEEE COMP. Soc. Press, US, Bd. Vol 1 conf. 1, 13. November 1994 (1994-11-13), Seiten 208 - 212, XP000521960, ISBN: 0-8186-6952-7 ist es bekannt, zur Untersuchung bzw. Prüfung von Symbolen bzw. Bildern Korrelationsbildpunkte zu suchen bzw. festzustellen, die dem jeweils angewandten Prüfungsverfahren zugrundegelegt werden. Diese Korrelationsbildpunktmengen liefern Angaben in Hinblick auf die Übereinstimmung zwischen einem vom Gegenstand aufgenommenen Bild und einem Sollbild.

Das erfindungsgemäße Verfahren und die erfindungsgemäße Einrichtung dienen zum Erstellen von Korrelations-Bildpunktmengen, mit deren Hilfe eine vorgegebene Anzahl von verschiedenen Symbolen, z.B. Schriftzeichen, wie Ziffern und/oder Buchstaben und Spielkartensymbole in digitalen Grauwert-Bildern unterschieden bzw. erkannt werden können. In Verbindung mit geeigneten Bild-Vorverarbeitungen eignen sich diese Soll-Bildpunktmengen auch besonders gut zum Erkennen von sehr kleinen und kontrastarmen Symbolen, bei denen andere Verfahren versagen.

Solche Korrelations-Bildpunktmengen werden vor allem dort gebraucht, wo die Aufnahmequalität wegen gegebener Randbedingungen nicht verbessert werden kann. Ein Beispiel dafür ist die Nummernerkennung bei optischen Banknoteninspektionssystemen. Die Beleuchtungsverhältnisse und die Kameraeinstellungen sind für die Qualitätskontrolle der Banknoten optimiert und können daher für die Nummernerkennung nicht verändert werden. Trotzdem besteht der Wunsch, die Banknoten-Nummern in den aufgenommenen Bildern zu lesen, um so ein weiteres Aufnahmesystem, das aus Platz- und Kostengründen nicht in Frage kommt, zu vermeiden.

Eine zu lösende Aufgabe könnte z.B. vorgeben, dass in digitalen Grauwert-Bildern innerhalb von vorgegebenen Bereichen alle Symbole, z.B. Schriftzeichen, identifiziert werden sollen. Die Symbole, die auftreten dürfen, sind bekannt. Schriftzeichen der gleichen Art, aber anderer Form, wie z.B. unterschiedliche Größe, gelten als verschieden. Von jedem Zeichen ist/sind zumindest ein, vorzugsweise aber mehrere Muster vorhanden. Diese Bildausschnitte, die jeweils genau ein Zeichen enthalten, werden im Folgenden Template und die zugehörigen Zeichen Template-Kategorien genannt. Die Templates entsprechen vorteilhaft den unterschiedlichen Erscheinungsformen der verwendeten Symbole. Unter diesen Voraussetzungen soll für jede Template-Kategorie eine Bildpunktmenge erstellt werden, mit der das zugehörige Zeichen identifiziert werden kann. Die Identifizierung erfolgt durch Berechnung von Korrelationsfunktionswerten der Bildpunktmengen an verschiedenen Stellen des digitalen Bildes. Die Korrelations-Bildpunktmengen sollen so beschaffen sein, dass bei Schrift-Zeichen der zugehörigen Kategorie eine gute Übereinstimmung (guter Korrelationsfunktionswert) erzielt wird, während bei allen anderen Kategorien die Übereinstimmung (der Korrelationsfunktionswert) immer schlecht ist.

Übliche Verfahren zur Erkennung von Schriftzeichen mittels Korrelation verwenden meist alle Bildpunkte von bekannten Vorlagen. Durch Druck- und Abbildungsstreuungen variieren die Erscheinungsform der Schriftzeichen etwas, sodass es zu unerwünschten Abweichungen von den Vorlagen kommt. Wenn diese zu groß werden, können die Zeichen nicht mehr richtig erkannt werden. Es ist daher sinnvoll, Bildpunkte, die von solchen Schwankungen stark betroffen sind, bei der Korrelation nicht zu berücksichtigen. Es ist somit günstiger, die passenden Bildpunkte gezielt zu berechnen, anstatt alle zu nehmen. Als Grundlage für diese Berechnungen dienen (vorzugsweise möglichst viele) bekannte Vorlagen für jedes mögliche Schriftzeichen.

Ein erfindungsgemäßes Verfahren der eingangs genannten Art ist durch die Merkmale des Anspruches 1 charakterisiert. Eine erfindungsgemäße Einrichtung der eingangs genannten Art ist durch die Merkmale des Anspruches 11 charakterisiert. Mit dieser Vorgangsweise bzw. Einrichtung können Korrelations-Bildpunktmengen erhalten werden, die exaktere Untersuchung von Symbolen zulassen.

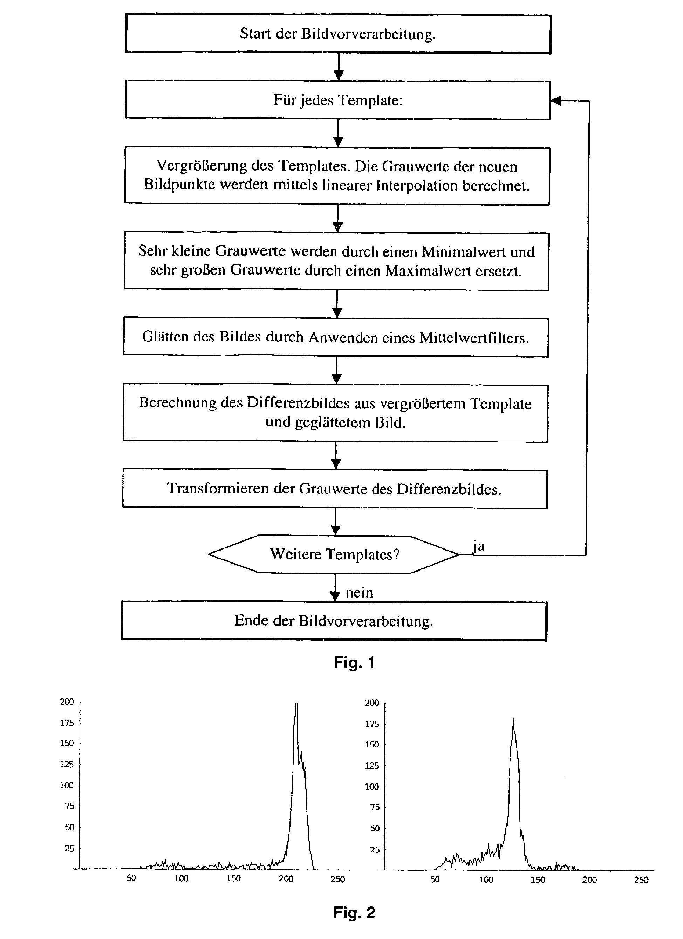

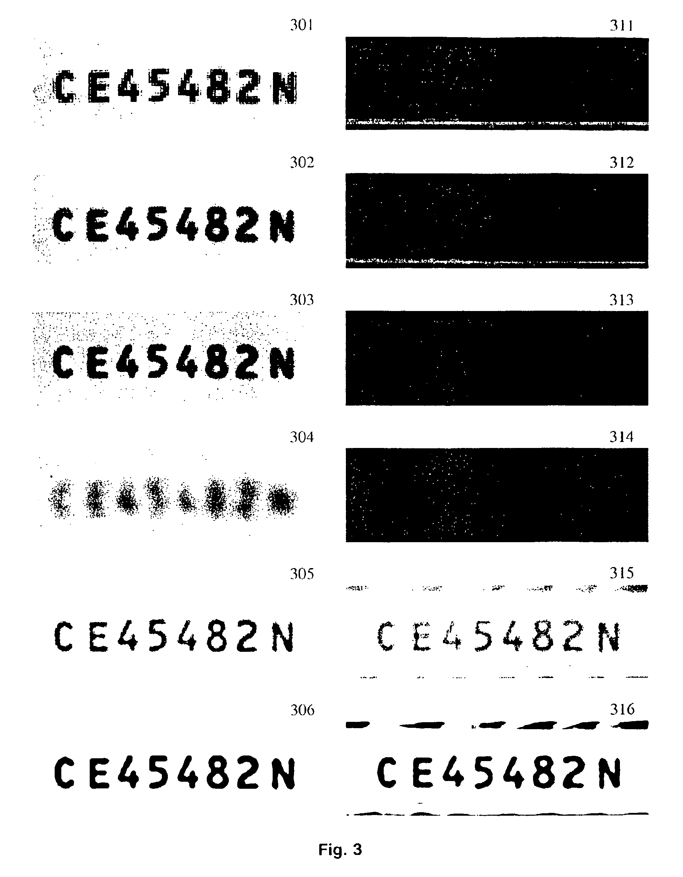

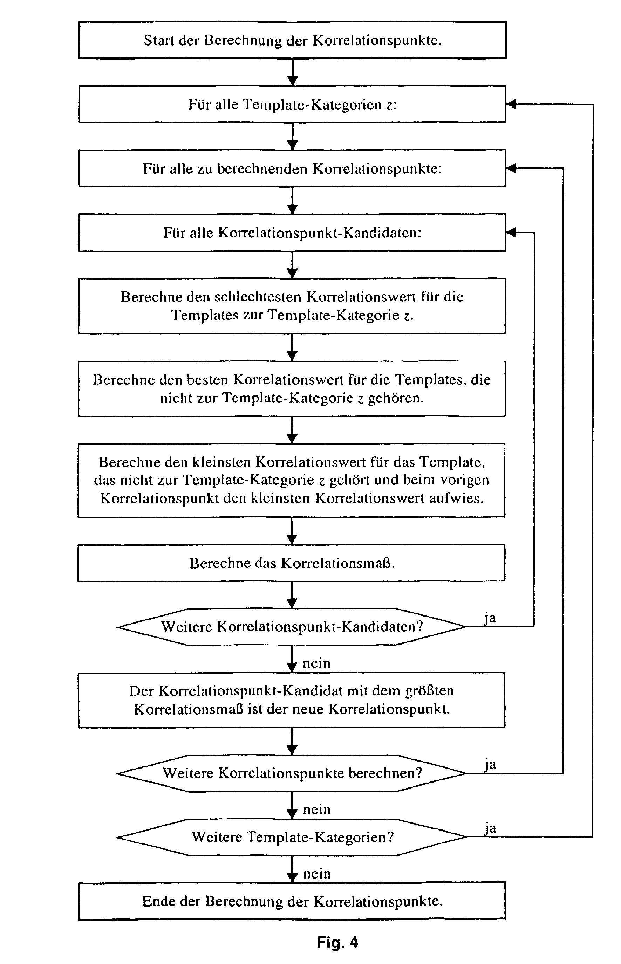

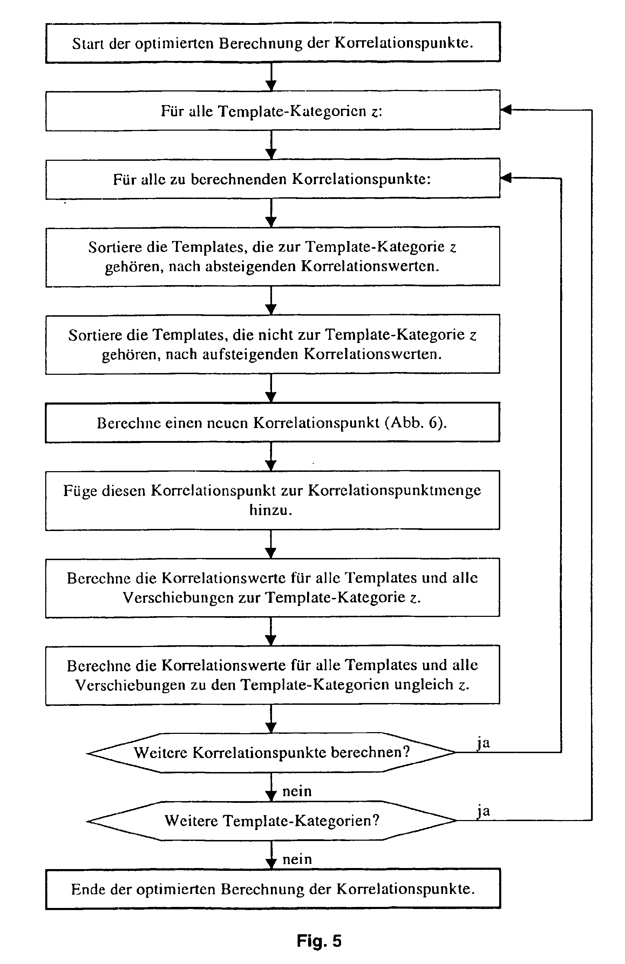

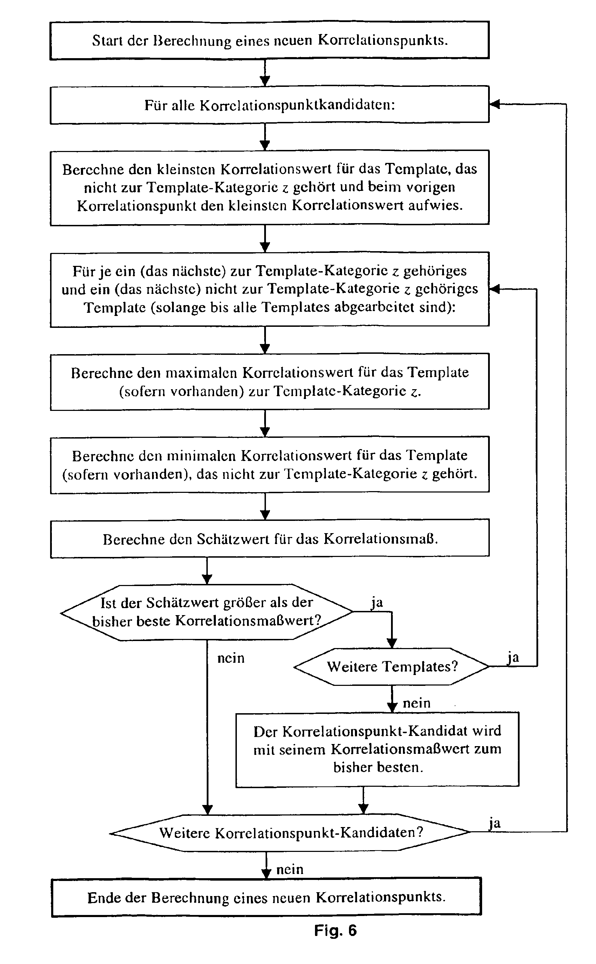

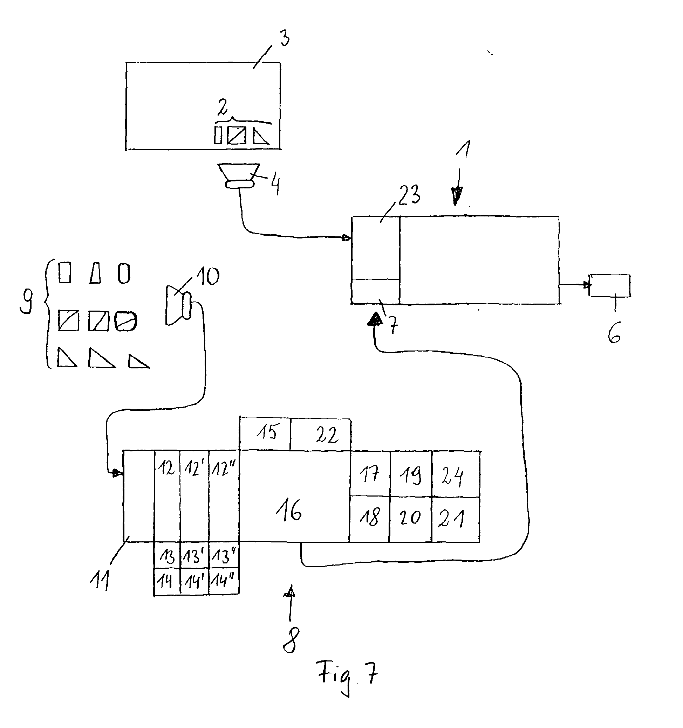

Im Folgenden wird die Erfindung anhand der Zeichnungen näher erläutert. Fig. 1 zeigt die Vorgehensweise im Vorverarbeitungsschritt in einem Ablaufdiagramm. Fig. 2 zeigt zwei Histogramme. Fig. 3 zeigt einzelne Schritte im Ablauf gemäß Fig. 1. Fig. 4 skizziert die grundlegende Vorgehensweise für die Bestimmung der Korrelations-Bildpunkte. Der optimale Ablauf zur Berechnung der Korrelations-Bildpunkte ist in Fig. 5 skizziert. Der Vorgang "Berechne einen neuen Korrelationspunkt" ist in Fig. 6 näher beschrieben. Fig. 7 zeigt schematisch eine erfindungsgemäße Einrichtung.

Vorteilhafte Ausführungsformen der Erfindung ergeben sich aus der folgenden Beschreibung, den Patentansprüchen und der Zeichnung.

Bei Grauwert-Bildern besteht oft das Problem, dass sich Schriftzeichen und Hintergrund bezüglich der Grauwerte manchmal nur wenig unterscheiden und dieser Unterschied oft noch stark schwanken kann. In solchen Fällen ist eine geeignete Bild-Vorverarbeitung notwendig, die solche Unterschiede weitgehend egalisiert. Meist wird dabei eine Binarisierung durchgeführt. D.h. die Bildpunkte im vorverarbeiteten Bild können nur noch einen von zwei möglichen Grauwerten (Weiß oder Schwarz) annehmen. Dadurch wird zwar das Problem der unterschiedlichen Grauwertschwankungen gelöst, bei sehr kleinen Schriftzeichen, die nur aus wenigen Bildpunkten bestehen, entsteht aber das Problem, dass zu wenige Bildpunkte übrig bleiben, die trotz Druck- und Abbildungsstreuungen beim gleichen Schriftzeichen immer den gleichen Wert annehmen. Eine Unterscheidung der Schriftzeichen ist dann entsprechend fehleranfällig bzw. nicht mehr möglich.

Im Folgenden wird angenommen, dass die Bildpunkte der Schriftzeichen kleinere Grauwerte haben, also dunkler sind als die Bildpunkte des Hintergrunds. Im umgekehrten Fall können entweder die Bilder invertiert oder das Verfahren entsprechend angepasst werden.

Das erfindungsgemäße Verfahren zur Erstellung von Korrelations-Bildpunktmengen kann eine Bild-Vorverarbeitung umfassen, die auf die bekannten Schriftzeichen-Vorlagen, auch Templates genannt, angewandt werden kann. Wesentlich ist die Berechnung der Korrelations-Bildpunkte aufgrund der gegebenenfalls vorverarbeiteten Templates.

Bei der Bild-Vorverarbeitung wird davon ausgegangen, dass von den Symbolen, z.B. Schriftzeichen, Grauwert-Bilder vorliegen. Eine sofortige Binarisierung, bei der jedem Bildpunkt genau ein Binärwert zugeordnet wird, würde bei sehr kleinen Schriftzeichen zu Schwierigkeiten führen, da das fertige Binärbild schon bei kleinen Grauwert-Abweichungen im ursprünglich Bild sehr unterschiedlich ausfallen kann. Es ist aber erfindungsgemäß wünschenswert, dass sich die Tempiates der gleichen Template-Kategorie nach der Bild-Vorverarbeitung einander sehr ähnlich sehen.

Erfindungsgemäß wird in diesem Fall gemäß den Merkmalen des Anspruches 2 vorgegangen.

Um das Problem der geringen Auflösung zu entschärfen, wird zuerst das Bild vergrößert. Durch ein Interpolationsverfahren werden weitere Bildpunkte erzeugt. So können die Templates in Breite und Höhe z.B. jeweils um den Faktor 2 vergrößert werden. Die Anzahl der Bildpunkte steigt dann auf das Vierfache. Der Faktor muss nicht unbedingt ganzzahlig sein. Für Höhe und Breite wird vorzugsweise der gleiche Faktor verwendet, er kann aber auch verschieden sein. Durch die Erhöhung der Auflösung bzw. der Bildpunktanzahl wird die nachfolgende Binarisierung genauer.

Im nächsten Schritt werden sehr kleine Grauwerte durch einen Minimalwert ersetzt. Analog werden sehr große Grauwerte durch einen Maximalwert ersetzt. Diese Minimal- bzw. Maximalwerte werden je nach Anwendung verschieden gesetzt. Der Minimalwert ist jener Grauwert, ab dem mit Sicherheit davon ausgegangen werden kann, dass es sich um einen Bildpunkt des Schriftzeichens handelt. Der Maximalwert ist jener Grauwert, ab dem mit Sicherheit von einem Hintergrundbildpunkt ausgegangen werden kann. Auf das so entstandene Bild wird ein Mittelwertfilter angewandt. Für die Größe des Filters wird ungefähr die halbe Höhe des Schriftzeichens verwendet. Bei einer Zeichenhöhe von z.B. 11 Bildpunkten im ursprünglichen Bild wächst diese nach der Verdopplung der Auflösung auf 22 an. Es wird daher ein Mittelwertfilter der Größe 11x11 verwendet. Je nach Anwendungsfall kann aber ein etwas kleinerer oder größerer Filter besser geeignet sein. Das mittelwertgefilterte Bild wird vom vergrößerten ursprünglichen Bild subtrahiert.

Durch diese Schritte wird ein Bild erzeugt, in dem niederfrequente Anteile herausgefiltert wurden. Es bleiben nur die hochfrequenten Anteile, also hauptsächlich die Schriftzeichen übrig. Jetzt könnte mit einem geeigneten Schwellwert leicht eine Binarisierung durchgeführt werden. Es werden aber bessere Resultate erzielt, wenn nur eine Beinahe-Binarisierung durchgeführt wird. Dabei werden allen Bildpunkte, deren Grauwerte unter einem unteren Schwellwert liegen, auf schwarz gesetzt und alle Bildpunkte, deren Grauwert über einem oberen Schwellwert liegen, auf weiß gesetzt. Bildpunkte mit dazwischenliegenden Grauwerten bekommen entsprechende Zwischenwerte (grau) zugewiesen. Der Unterschied zwischen unterem und oberen Schwellwert sollte nicht zu groß gewählt werden, sodass das fertige Bild hauptsächlich aus schwarzen und weißen Bildpunkten besteht und nur sehr wenige graue Bildpunkte auftreten.

Fig. 1 zeigt die Vorgehensweise im Vorverarbeitungsschritt in einem Ablaufdiagramm. In Fig. 3 sind die einzelnen Schritte anhand zweier Beispiele dargestellt. Auf der linken Seite befindet sich eine Zeichenfolge mit recht guten Kontrastverhältnissen (301). Auf der rechten Seite ist die gleiche Zeichenfolge auf einem dunkleren Hintergrund aufgedruckt und der Kontrast daher schlechter (311). Die Schriftzeichen sind ungefähr 11 Bildpunkte hoch. In den darunter befindlichen Bildern (302 und 312) wurde die Auflösung durch lineare Interpolation erhöht. Die Bildpunktanzahl wurde sowohl in der Breite, als auch in der Höhe um den Faktor 4 erhöht. Darunter befinden sich die Bilder, bei denen die extremsten Grauwerte abgeschnitten wurden (303 und 313). Die dafür verwendeten Schwellwerte wurden aufgrund der Histogramme in Fig. 2 gewählt. In diesen sind die Häufigkeiten für jeden Grauwert aufgetragen. Die großen Erhebungen dort entstehen offensichtlich durch die zahlenmäßig überlegenen Hintergrundbildpunkte. Im linken Histogramm beginnt diese Erhebung ungefähr beim Grauwert 200 und beim rechten Histogramm schon beim Grauwert 120. Diesen beide Werte wurden als obere Schwellwerte verwendet. Die Grauwerte der Schriftzeichen bilden in beiden Histogrammen keine ausgeprägte Erhebung. Stattdessen gibt es jeweils nur einen langgezogenen Bereich von verschiedenen Grauwerten mit ähnlicher Häufigkeit. Die unteren Schwellwerte werden vorzugsweise ungefähr in der Mitte dieser Bereiche oder etwas darüber gewählt. Im vorliegenden Fall wurden die Grauwerte 130 für das linke Bild und 100 für das rechte Bild verwendet. Auf die Bilder mit den abgeschnittenen Grauwerten wird ein Mittelwertfilter der Größe 21x21 angewandt (304 und 314). Danach werden die Differenzbilder zwischen 302 und 304 bzw. zwischen 312 und 314 berechnet (305 und 315). Zur besseren Darstellung wird dabei zu jedem Bildpunkt der frei gewählte Grauwert 200 addiert. Andernfalls würden bei der Differenzbildung negative Werte entstehen. Zum Abschluss wird eine Beinahe-Binarisierung vorgenommen (306 und 316). Alle Werte, die kleiner als 180 sind, werden auf 0, den Grauwert für schwarz, abgebildet. Alle Werte, die größer sind als 195 werden auf 255, den Grauwert für weiß, abgebildet. Grauwerte die zwischen 180 und 195 liegen werden je nach ihrer Nähe zu einem dieser Werte auf entsprechende Grauwerte abgebildet.

Das obige Beispiel bezog sich auf einen größeren Bildausschnitt. Die Vorgangsweise wird aber in gleicher Weise auf jedes einzelne Template angewandt. So entstehen normierte Bilder zu den einzelnen Schriftzeichen, die als Grundlage für die Bestimmung der Korrelationspunkte dienen. Wenn im Folgenden von Templates die Rede ist, sind vor allem derartig normierte Bilder gemeint.

Fig. 4 skizziert die grundlegende Vorgehensweise für die Bestimmung der Korrelations-Bildpunkte. Für jede Template-Kategorie wird eine Korrelations-Bildpunktmenge berechnet. Die Korrelations-Bildpunkte werden in iterativer Weise ermittelt. Aufgrund eines Korrelationsmaßes wird in jedem Iterationsschritt aus einer Menge von Korrelationsbildpunkt-Kandidaten einer ausgewählt und der Menge der Korrelations-Bildpunkte hinzugefügt. Der Schritt wird wiederholt, bis die Korrelations-Bildpunktmenge die gewünschte Größe erreicht hat. Dies wird für jede Template-Kategorie durchgeführt.

Durch das Korrelationsmaß erfolgt eine Bewertung, wie gut ein Korrelationsbildpunkt-Kandidat die bereits bestehende Korrelations-Bildpunktmenge ergänzt. Je höher der Korrelationsmaßwert ist, umso geeigneter ist der Korrelationsbildpunkt-Kandidat. Dies ist dann der Fall, wenn die um den Korrelationsbildpunkt-Kandidaten erweiterte Korrelations-Bildpunktmenge beim Vergleich mit Templates der zugehörigen Template-Kategorien sehr gute Korrelationsfunktionswerte und beim Vergleich mit Templates anderer Template-Kategorien immer möglichst schlechte Korrelationsfunktionswerte liefert. Um dies zu gewährleisten, wird gemäß den Merkmalen des Anspruches 3 vorgegangen.

Beim Vergleich der Korrelations-Bildpunktmenge mit den Templates der zugehörigen Template-Kategorie soll auch bei kleinen örtlichen Verschiebungen der Bildpunktmenge gegenüber den Templates ein guter Korrelationsfunktionswert herauskommen. Erfindungsgemäß dienen dazu die Merkmale der Ansprüche 7 und/oder 8. So wird sichergestellt, dass später beim Erkennen der Schriftzeichen mittels der Korrelations-Bildpunktmengen kleine Ungenauigkeiten bei der Positionsbestimmung der Zeichen toleriert werden können. Die Korrelations-Bildpunkte werden wegen der Verschiebungen automatisch so gewählt, dass sie von der Grenze zwischen Vorder- und Hintergrund ein Stück entfernt liegen. Dieser Effekt hat auch den Vorteil, dass besonders fett und besonders schmal gedruckte Zeichen richtig erkannt werden.

Beim Vergleich der Korrelations-Bildpunktmenge mit den Templates einer anderen Template-Kategorie soll bei jeder eventuell auftretenden örtlichen Verschiebung der Bildpunktmenge gegenüber den Templates ein schlechter Korrelationsfunktionswert herauskommen. Es müssen vor allem jene Verschiebungen untersucht werden, die auch beim späteren Anwenden der Korrelations-Bildpunktmenge verwendet werden. Diese sind wiederum notwendig, um eventuelle Ungenauigkeiten bei der Positionsbestimmung der Zeichen zu kompensieren. Die Korrelations-Bildpunktmengen müssen dann an mehreren Stellen mit dem Zeichen korreliert werden, um eine mögliche Übereinstimmung nicht zu übersehen. Bei der Erstellung der Korrelations-Bildpunktmenge sollten aber zur Sicherheit noch mehr Verschiebungen, speziell in einem feineren Raster überprüft werden, um die Gefahr einer unerwünschten Übereinstimmung aufgrund einer unglücklichen Konstellation nicht zu übersehen. Üblicherweise sind diese Verschiebungen unterschiedlich zu jenen, die beim Vergleich einer Korrelations-Bildpunktmenge mit Templates der zugehörigen Template-Kategorie berücksichtigt werden.

Für die Berechnung der Korrelationsbildpunkt-Kandidaten können die Merkmale des Anspruches 6 eingesetzt werden. In diesem Fall kann für jede Template-Kategorie ein Mittelwert-Template berechnet werden. Dieses ergibt sich aus den Templates einer Kategorie, indem für jede Bildpunkt-Position der Mittelwert der Grauwerte der zugehörigen Template-Bildpunkte gebildet wird. Aus diesem Mittelwert-Template wird eine Liste von Korrelationsbildpunkt-Kandidaten gebildet, deren Koordinaten und Grauwerte mit denen des Mittelwert-Templates übereinstimmen. Es ist meist vorteilhaft, mehr Korrelationsbildpunkt-Kandidaten zur Verfügung zu stellen, als Bildpunkte im Mittelwert-Template vorhanden sind, also auch nicht ganzzahlige Koordinaten zuzulassen. Die zugehörigen Grauwerte werden aus dem Mittelwert-Template durch Interpolation gewonnen. Je höher die Anzahl der Korrelationsbildpunkt-Kandidaten ist, desto besser ist das zu erwartende Ergebnis. Allerdings steigt im Gegenzug dazu der Rechenaufwand.

Das Korrelationsmaß für eine Korrelations-Bildpunktmenge ist eine vorgegebene bzw. gewählte Funktion und berechnet z.B. das Verhältnis zwischen dem besten Korrelationsfunktionswert mit Templates der nicht zugehörigen Template-Kategorie und dem schlechtesten Korrelationsfunktionswert mit Templates der zugehörigen Template-Kategorie, also das Verhältnis zwischen den beiden jeweils kritischsten Konstellationen. Unter der Voraussetzung, dass die vorgegebene bzw. gewählte Korrelationsfunktion so beschaffen bzw. gewählt ist, dass kleine Korrelationsfunktionswerte eine gute Übereinstimmung signalisieren, bedeutet ein hoher Korrelationsmaßwert, dass die Korrelations-Bildpunktmenge die Templates der zugehörigen bzw. eigenen Template-Kategorie gut von den Templates der anderen bzw. fremden Template-Kategorie unterscheiden kann.

Es ist oft unmöglich, durch Vergrößerung der Korrelations-Bildpunktmenge um einen einzigen weiteren Korrelations-Bildpunkt das Korrelationsmaß deutlich zu erhöhen. Dies liegt daran, dass dafür eine sofortige verbesserte Absicherung gegen die Templates mehrerer nicht zugehöriger Template-Kategorien erfolgen müsste. Das Korrelationsmaß berücksichtigt daher im besonderen Maße jenes Template einer nicht zughörigen Template-Kategorie, das mit der noch nicht erweiterten Korrelations-Bildpunktmenge am besten korreliert. Dies ist sozusagen der kritischste Fall des vorhergehenden Iterationsschrittes. Wenn ein Korrelationsbildpunkt-Kandidat bezüglich diesem Template eine besonders gute Unterscheidung (schlechter Korrelationsfunktionswert) liefert, wird dies im Korrelationsmaß berücksichtigt. Der nächste kritische Fall wird dann mit dem nächsten Korrelations-Bildpunkt besonders berücksichtigt. Auf diese Weise werden die kritischen Fälle nacheinander behandelt, statt alle auf einmal.

Die Korrelationsfunktion berechnet auch, wie gut die Übereinstimmung zwischen einer Korrelations-Bildpunktmenge und einem Template bei einer gegebenen Verschiebung ist. Durch die Verschiebung wird bestimmt, an welcher Stelle die Korrelations-Bildpunktmenge mit dem Template zur Deckung gebracht werden soll. So wird z.B. für jeden Korrelations-Bildpunkt der Absolutbetrag der Grauwertdifferenz zum zugehörigen Bildpunkt des Templates berechnet. Die Korrelationsfunktion kann dann z.B. die Summe dieser Absolutbeträge sein, wobei die Absolutbeträge vorher noch zur dritten Potenz erhoben werden könnten.

Anhand eines Beispieles wird die erfindungsgemäße Vorgangsweise näher erläutert:

Es sollen 10 Korrelations-Bildpunktmengen mit je 50 Punkten für die Unterscheidung von Ziffern erstellt werden. Die Ziffernhöhe beträgt 2.5 mm. Die Auflösung beträgt 0.25 mm pro Bildpunkt. Für jede der 10 Ziffern stehen 100 Templates zur Verfügung. Die Templates sind 10x12, also 120 Bildpunkte groß.

Die Templates werden bei der Bild-Vorverarbeitung durch Interpolation um den Faktor 2 in x- und y-Richtung vergrößert und sind dann 20x24, also 480 Bildpunkte groß. Gleiches gilt für die Mittelwert-Templates. Die Korrelationsbildpunkt-Kandidaten werden in einem doppelt so feinen Raster durch Interpolation aus den Mittelwert-Templates gewonnen. Die Anzahl beträgt daher für jede Template-Kategorie 40x48, also 1920.

Beim Vergleich mit Templates einer anderen Template-Kategorie werden z.B. 5x5, also 25 Verschiebungen untersucht. Die Korrelationsfunktion besteht aus der Summe der dritten Potenzen der absoluten Grauwertdifferenzen.

Betrachtet man den Algorithmus, so sieht man, dass bei einer Software-Implementierung bis zu 7 Schleifen ineinandergeschachtelt sind (die Zahlenangaben sind nur Beispiele):

1. Für jede der 10 Template-Kategorien wird eine Korrelations-Bildpunktmenge erstellt.
2. Für jede Korrelations-Bildpunktmenge werden 50 Korrelationspunkte berechnet.
3. Für jeden Korrelationspunkt werden 1920 Korrelationsbildpunkt-Kandidaten getestet.
4. Die provisorische Korrelations-Bildpunktmenge (mit dem zu testenden Korrelationsbildpunkt-Kandidaten) wird mit jeder der 9 anderen Template-Kategorien getestet.
5. Für jede Template-Kategorie wird mit 100 Templates getestet.
6. Für jedes Template werden 25 Verschiebungen untersucht.
7. Die Berechnung des Korrelationsfunktionswertes zwischen der zu testenden Korrelations-Bildpunktmenge und dem ausgewählten Template bei der ausgewählten Verschiebung umfasst die Berechnung und Summation von bis zu 50 Termen (einer pro Korrelationspunkt). Durchschnittlich werden daher 25 Terme berechnet. Dabei wird jeweils der Absolutbetrag einer Differenz gebildet und dann potenziert.

Multipliziert man die Schleifengrößen miteinander, so kommt man auf über 500 Milliarden Durchgänge für die innerste Schleife. Diese Zahl kann noch erheblich wachsen, wenn z.B. auch Buchstaben (mehr Template-Kategorien) erkannt werden sollen oder mehr Verschiebungen untersucht werden sollen. Das Verfahren soll daher für den Praxiseinsatz noch optimiert werden.

Der optimierte Ablauf zur Berechung der Korrelations-Bildpunkte ist in Fig. 5 skizziert. Der Vorgang "Berechne einen neuen Korrelationspunkt" ist in Fig. 6 näher beschrieben.

Die optimierte Version liefert das gleiche Ergebnis, wie die nicht optimierte Version, aber mit einer deutlich verkürzten Rechenzeit und stellt eine bevorzugte Ausführungsform der Erfindung dar. Erfindungsgemäß kommen in diesem Fall die Merkmale des Anspruches 10 zum Einsatz.

Die offensichtlichste Optimierung betrifft die Berechnung der Korrelationsfunktionswerte. Die Korrelations-Bildpunktmenge wird jeweils vorteilhafterweise nur um einen, maximal zwei Korrelationsbildpunkt-Kandidaten erweitert. Die bereits enthaltenen Korrelationspunkte bleiben unverändert. Gleiches gilt auch für deren Anteil am Wert der Korrelationsfunktion. Bevor daher alle Korrelationsbildpunkt-Kandidaten getestet werden, erfolgt für die noch nicht erweiterte Korrelations-Bildpunktmenge und für jedes Template kombiniert mit jeder zu untersuchenden Verschiebung die Berechnung und Speicherung des zugehörigen Korrelationsfunktionswertes. Statt nun für jeden Korrelationsbildpunkt-Kandidaten die Korrelationsfunktionswerte komplett neu zu berechnen, kann auf diese gespeicherten Werte zurückgegriffen werden. Aus ihnen lässt sich der neue Korrelationsfunktionswert schnell berechnen, indem der Anteil für den Korrelationsbildpunkt-Kandidaten dazu addiert wird. Der Aufwand für die Berechnung eines Korrelationsfunktionswertes ist dann konstant und steigt nicht mehr mit der Größe der Korrelations-Bildpunktmenge.

Vorteilhaft ist die Vorgangsweise gemäß Anspruch 10. Es wird jeweils jener Korrelationsbildpunkt-Kandidat gesucht, der zum größten Korrelationsmaßwert führt. Für die Berechnung eines Korrelationsmaßwertes müssen die Korrelationsfunktionswerte für alle Kombinationen von Templates und Verschiebungen berechnet werden. Um aber nur den Korrelationsbildpunkt-Kandidaten mit dem maximalen Korrelationsmaßwert zu finden, müssen nicht unbedingt die Korrelationsmaßwerte für alle Korrelationsbildpunkt-Kandidaten berechnet werden. Oft genügt es, die Korrelationsmaßwerte für einige wenige, im Extremfall sogar nur für ein Korrelationsbildpunkt-Kandidaten zu berechnen und die Korrelationsmaße für alle anderen Korrelationsbildpunkt-Kandidaten abzuschätzen. Zur Ermittlung eines Korrelationsmaß-Schätzwertes für einen Korrelationsbildpunkt-Kandidaten werden zu Beginn nur die Korrelationsfunktionswerte für das erste Template der zugehörigen Template-Kategorie und das erste Template aus der Menge aller anderen Template-Kategorien gewählt. Mit diesen Korrelationsfunktionswerten wird ein erster Korrelationsmaß-Schätzwert berechnet. Ist dieser Schätzwert größer bzw. besser als der Korrelationsmaßwert des besten zuvor ermittelten Korrelationsbildpunkt-Kandidaten oder wurde noch kein Korrelationsbildpunkt-Kandidat untersucht, werden die Korrelationsfunktionswerte für die nächsten Templates berechnet und so weiter. Entweder werden auf diese Weise alle Templates untersucht und somit der tatsächliche Korrelationsmaßwert für den Korrelationsbildpunkt-Kandidaten berechnet, oder die Abschätzung für den Korrelationsmaßwert ist irgendwann einmal kleiner oder gleich dem Korrelationsmaßwert des besten zuvor ermittelten Korrelationsbildpunkt-Kandidaten. Im letzteren Fall kann zum nächsten Korrelationsbildpunkt-Kandidaten übergegangen werden, da durch die Untersuchung weiterer Templates nur eine weitere Reduktion der Abschätzung für den Korrelationsmaßwert zur Folge haben kann, also sichergestellt ist, dass der Korrelationsbildpunkt-Kandidat nicht geeigneter ist als der bisher beste.

Auf diese Weise müssen im Allgemeinen weit weniger Korrelationsfunktionswerte berechnet werden. Diese Optimierung kann in ihrer Effektivität dadurch gesteigert werden, dass die Templates vor der Ermittlung des nächsten Korrelationspunktes gemäß ihrer Wichtigkeit sortiert werden. Dazu werden die Templates der zugehörigen Template-Kategorie und getrennt dazu die Templates der anderen Template-Kategorien sortiert. Bei den Templates der zugehörigen Template-Kategorie sind jene wichtiger und daher vorzureihen, die mit der Korrelations-Bildpunktmenge hohe (d.h. schlechte) Korrelationsfunktionswerte liefern. Bei den Templates der anderen Template-Kategorie sind jene wichtiger und daher vorzureihen, die mit der Korrelations-Bildpunktmenge niedrige (d.h. gute) Korrelationsfunktionswerte liefern. Durch diese Sortierungen werden kritische bzw. schwer zu unterscheidende Templates zuerst untersucht. Die Abschätzungen für die Korrelationsmaßwerte der Korrelationsbildpunkt-Kandidaten sind dadurch schon nach den ersten zu untersuchenden Templates sehr gut, sodass für die meisten nachfolgenden Korrelationsbildpunkt-Kandidaten die Berechnungen wahrscheinlich sehr früh abgebrochen werden können.

Ein wichtiger Vorteil gegenüber bekannten Verfahren liegt auch in der beschriebenen Bild-Vorverarbeitung. Diese ist speziell auf kleine kontrastarme Zeichen abgestimmt. Bei großen bzw. kontrastreichen Zeichen kann sie entweder entfallen (z.B. wenn bereits Schwarz-Weiß-Bilder vorliegen) oder es kann eine andere Bild-Vorverarbeitung verwendet werden.

Bei der hier beschriebenen Variante der Bild-Vorverarbeitung wird vor allem durch die künstliche Vergrößerung der Bildpunktanzahl eine entscheidende Verbesserung erzielt. Die Grauwerte der zusätzlichen Punkte werden durch Interpolation gewonnen. Hierfür genügt eine lineare Interpolation, die einfach und schnell zu berechnen ist.

Eine weitere Verbesserung wird dadurch erzielt, dass im Gegensatz zu anderen Verfahren keine vollständige Binarisierung sondern nur eine Beinahe-Binarisierung vorgenommen wird. Dadurch muss bei einem schwer zu beurteilenden Bildpunkt nicht entschieden werden, ob es sich um einen Vordergrund- oder Hintergrund-Bildpunkt handelt. So werden unangenehme Fehlentscheidungen vermieden.

Andere auf Korrelation beruhende Verfahren verwenden alle Bildpunkte von Referenzbildern. Bei dem hier vorliegenden Verfahren können durch die gezielte Auswahl von Punkten jene weggelassen werden, die zur Zeichenerkennung nichts beitragen oder dieser sogar schaden. Die Punkte können zudem aus einem sehr feinen Raster ausgewählt und dadurch genau platziert werden.

Durch die Optimierung des Verfahrens für die Berechnung der Korrelationspunkte ist es möglich, mehrere Templates pro Zeichen zu verwenden. Durch die Vielzahl der Musterzeichen werden bei dem Verfahren die Korrelationspunkte so berechnet, dass die kleinen auftretenden Unterschiede beim selben Zeichen toleriert werden. Solche Unterschiede entstehen z.B. druckbedingt oder durch das Aufnahmesystem (z.B. Kamerarauschen). Die Korrelationspunkte werden durch das Verfahren automatisch so ausgewählt, das sie aus möglichst stabilen Bildteilen kommen. Damit sind Bereiche gemeint, die bezüglich des Grauwerts bei allen Mustern eines Zeichens wenig schwanken.

Bei großen (aus vielen Bildpunkten bestehenden) Zeichen kann durch die vergleichsweise geringe Anzahl von Korrelationspunkten in den Korrelations-Bildpunktmengen eine höhere Verarbeitungsgeschwindigkeit erreicht werden.

Im Folgenden erfolgt eine mathematische Definition der verwendeten Begriffe und sodann, unter Bezugnahme auf die in den Figuren angegebenen Flussdiagrammen eine Angabe von den zugrundeliegenden funktionalen Abläufen:

Anzahl der Template-Kategorien: $S$

Anzahl der Templates zur Template-Kategorie $t$: $D_t$

Templategröße zur Template-Kategorie $t$: $X_t \times Y_t$

Template d zur Template-Kategorie $t$: $T_{t,d}(x,y)$, $1 \leq t \leq S$, $1 \leq d \leq D_t$, $1 \leq x \leq X_t$, $1 \leq y \leq Y_t$

Mittelwert-Template zur Template-Kategorie $t$:

$$\overline{T}_t(x,y) = \frac{\sum_{d=1}^{D_t} T_{t,d}(x,y)}{D_t}$$

Korrelations-Bildpunktmenge mit $N$ Bildpunkt-Grauwerten zur Template-Kategorie $t$: $P_{t,N}(i)$, $1 \le i \le N$

Koordinaten des Korrelationspunktes $i$ zur Template-Kategorie $t$: $(x_{t,i}, y_{t,i})$

Anzahl der Korrelationsbildpunkt-Kandidaten zur Template-Kategorie $z$: $C_z$

Grauwert des Korrelationsbildpunkt-Kandidaten $c$ zur Template-Kategorie $z$: $q_{z,c}$, $1 \le c \le C_z$

Koordinaten des Korrelationsbildpunkt-Kandidaten $c$ zur Template-Kategorie $z$: $(x_{z,c}, y_{z,c})$

Verschiebungen für Korrelations-Bildpunktmengen zu Templates der zugehörigen Template-Kategorie: $\hat{w}_j = (\hat{u}_j, \hat{v}_j)$, $1 \le j \le e$

Verschiebungen für Korrelations-Bildpunktmengen zu Templates einer anderen Template-Kategorie: $w_k = (u_k, v_k)$, $1 \le k \le a$

Korrelationsfunktion für die Korrelations-Bildpunktmenge $P_{t,N}$, das Template $T_{t,d}$ und die Verschiebung

$$F(P_{t,N}, T_{t,d}, w_k) = \sum_{i=1}^{N} \left| P_{t,N}(i) - T_{t,d}(x_{t,i} + u_k, y_{t,i} + v_k) \right|^{\gamma}$$

Da die Korrelations-Bildpunktmengen jeweils Obermengen ihrer Vorgänger sind, ergibt sich für die Korrelationsfunktion folgender Zusammenhang:

$$F(P_{t,N}, T_{t,d}, w_k) = F(P_{t,N-1}, T_{t,d}, w_k) + \left| P_{t,N}(N) - T_{t,d}(x_{t,N} + u_k, y_{t,N} + v_k) \right|^{\gamma}$$

Für leere Korrelations-Bildpunktmengen, also für $N = 0$ gilt per Definition:

$$F(P_{t,0}, T_{t,d}, w_k) = 0$$

Größter Korrelationsfunktionswert zwischen der Korrelations-Bildpunktmenge $P_{z,N}$ und Templates $T_{z,d}$ die zur gleichen Template-Kategorie $z$ gehören sowie bezüglich aller Verschiebungen $\hat{w}_j$: $E_{z,N} = \max_{d,j} F(P_{z,N}, T_{z,d}, \hat{w}_j)$

Kleinster Korrelationsfunktionswert zwischen der Korrelations-Bildpunktmenge $P_{z,N}$, die zur Template-Kategorie $z$ gehört, und allen Templates $T_{t,d}$, die nicht zur Template-Kategorie $z$ gehören, sowie bezüglich allen Verschiebungen $w_k$: $A_{z,N} = \min_{t \ne z, d, k} F(P_{z,N}, T_{t,d}, w_k)$ $t_{z,N-1}$ und $d_{z,N-1}$ bezeichnen die Template-Kategorie und den Template-Index jenes nicht zur Template-Kategorie $z$ gehörigen Templates, bei dem für die Korrelations-Bildpunktmenge $P_{z,N-1}$ der kleinste Korrelationsfunktionswert erreicht wurde (kritisches Template aus dem letzten Iterationsschritt). Es gilt daher: $\min_{k} F(P_{z,N-1}, T_{t_{z,N-1}, d_{z,N-1}}, w_k) = A_{z,N-1}$

Kleinster Korrelationsfunktionswert bei diesem Template für die Korrelations-Bildpunktmenge $P_{z,N}$:

$B_{z,N} = \min_{k} F(P_{z,N}, T_{t_{z,N-1}, d_{z,N-1}}, w_k)$

Das (heuristische gewählte) Korrelationsmaß ist eine Funktion von $A_{z,N}$, $B_{z,N}$ und $E_{z,N}$, sowie dem Gewichtungsfaktor *â* und dem Exponenten *ä*: $M_{z,N} = \dfrac{\left(A_{z,N} + \beta B_{z,N}\right)^{\delta}}{\max(1, E_{z,N})}$

Für *â* wird typischerweise ein Wert unter 1 verwendet (z.B. 0.3). Er sollte umso kleiner gewählt werden, je größer die Anzahl S der Template-Kategorien ist (z.B. kann $\beta = \dfrac{1}{\sqrt{S}}$ verwendet werden). Für *ä* wird typischerweise der Wert 1 oder 2 verwendet.

***Nicht optimiertes Verfahren für die Berechnung der Korrelationspunkte***

für alle Template-Kategorien *z* = 1... *S*

    für alle zu bestimmenden Korrelationspunkte *N* = 1...*N*,

$$M_{z,N} := -\infty\,;$$

        für alle Punktkandidaten *c* = 1...*C$_z$*;

$$E_{z,N} := -\infty\,;$$

          für alle Templates der ausgewählten Kategorie *d* = 1... *D$_z$*

            für alle Verschiebungen für eigene Templates *j* =1...*e*

$$f := F(P_{z,N-1} \cup \{q_{z,c}\}, T_{z,d}, \hat{w}_j)\,;$$

$$f > E_{z,N} \Rightarrow E_{z,N} := f\,;$$

$$A_{z,N} := \infty\,;$$

          für alle anderen Template-Kategorien *t* = 1...*S*, *t* $\neq$ *z*

            für alle Templates dieser anderen Kategorie *d* = 1...*D$_t$*

              für alle Verschiebungen für andere Templates *k* = 1...*a*

$$g := F(P_{z,N-1} \cup \{q_{z,c}\}, T_{t,d}, w_k)\,;$$

$$g < A_{z,N} \Rightarrow A_{z,N} := g, t_{\text{krit}} := t, d_{\text{krit}} := d\,;$$

$$B_{z,N} := \infty \, ;$$

für alle Verschiebungen zu anderen Templates $k = 1 \ldots a$

$$f := F(P_{z,N-1} \cup \{q_{z,c}\}, T_{t_{z,N-1}, d_{z,N-1}}, w_k) \, ;$$

$$f < B_{z,N} \Rightarrow B_{z,N} := f \, ;$$

$$m := \frac{\left(A_{z,N} + \beta B_{z,N}\right)^s}{\max(1, E_{z,N})} \, ;$$

$$m > M_{z,N} \Rightarrow M_{z,N} := m; \; P_{z,N} := P_{z,N-1} \cup \{q_{z,c}\}; \; t_{z,N} := t_{\text{krit}}; \; d_{z,N} := d_{\text{krit}} \, ;$$

***Optimiertes Verfahren für die Berechnung der Korrelationspunkte***

für alle Template-Kategorien $z = 1 \ldots S$

för alle zu bestimmenden Korrelationspunkte $N = 1 \ldots N_t$

$$M_{z,N} := -\infty \, ;$$

$$\{\hat{T}_l \mid 1 \le l \le D_z\} := \operatorname*{sort}_d (T_{z,d}, -\max_j F(P_{t,N-1}, T_{z,d}, \hat{w}_j)) \, ;$$

$$\{T_m \mid 1 \le m \le \sum_{t \ne z} D_t\} := \operatorname*{sort}_{t \ne z,d} (T_{t,d}, \min_k F(P_{t,N-1}, T_{t,d}, w_k)) \, ;$$

für alle Punktkandidaten $c = 1 \ldots C_t$

$$E_{z,N} := -\infty \, ;$$

$$A_{z,N} := \infty \, ;$$

$$B_{z,N} := \infty \, ;$$

für alle Verschiebungen für andere Templates $k = 1 \ldots a$

$$f := F(P_{z,N-1}, T_{t_{z,N-1}, d_{z,N-1}}, w_k) + \left| q_{z,c} - T_{z,d}(x_{z,N} + u_j, y_{z,N} + v_j) \right|^\gamma \, ;$$

$$f < B_{z,N} \Rightarrow B_{z,N} := f \, ;$$

nimm das nächste eigene (falls noch vorhanden) und das nächste andere Template (falls noch vorhanden)

$$l = 1 \ldots D_z, \, m = 1 \ldots \sum_{t \neq z} D_t$$

falls noch eigenes Template vorhanden:
für alle Verschiebungen für eigene Templates $j = 1 \ldots e$

$$f := F(P_{z,N-1}, \hat{T}_l, \hat{w}_j) + \left| q_{z,c} - \hat{T}_l(x_{z,c} + \hat{u}_j, y_{z,c} + \hat{v}_j) \right|^\gamma \, ;$$

$$f > E_{z,N} \Rightarrow E_{z,N} := f \, ;$$

falls noch anderes Template vorhanden:
für alle Verschiebungen für andere Templates $k = 1 \ldots a$

$$g := F(P_{z,N-1}, T_m, w_k) + \left| q_{z,c} - T_m(x_{z,c} + u_k, y_{z,c} + w_k) \right|^\gamma \, ;$$

$$g < A_{z,N} \Rightarrow A_{z,N} := g, t_{\mathrm{krit}} := t, d_{\mathrm{krit}} := d \, ;$$

$$M := \frac{\left( A_{z,N} + \beta B_{z,N} \right)^\rho}{\max(1, E_{z,N})} \, ;$$

$M \leq M_{z,N} \Rightarrow$ <u>Beende diese Schleife Gehe zur nächsten Zeile);</u>

$$M > M_{z,N} \Rightarrow M_{z,N} := M; P_{z,N} := P_{z,N-1} \cup \{q_{z,c}\}; t_{z,N} = t_{\mathrm{krit}}; d_{z,N} := d_{\mathrm{krit}} \, ;$$

für alle eigenen Templates $d = 1 \ldots D_z$

für alle Verschiebungen für eigene Templates $j = 1 \ldots e$

$$F(P_{z,N}, T_{z,d}, \hat{w}_j) := \\ F(P_{z,N-1}, T_{z,d}, \hat{w}_j) + \left| P_{z,N}(N) - T_{z,d}(x_{z,N} + \hat{u}_j, y_{z,N} + \hat{v}_j) \right|^\gamma \, ;$$

für alle anderen Template-Kategorien $t = 1 \ldots S, \, t \neq z$

für alle Templates dieser anderen Kategorie $d = 1...D_z$

für alle Verschiebungen für andere Templates $k = 1...a$

$$F(P_{z,N}, T_{t,d}, w_k) :=$$
$$F(P_{z,N-1}, T_{t,d}, w_k) + \left| P_{z,N}(N) - T_{z,d}(x_{z,N} + u_j, y_{z,N} + v_j) \right|^r ;$$

Fig. 7 zeigt schematisch eine erfindungsgemäße Einrichtung 8 zur Durchführung des erfindungsgemäßen Verfahrens.

Die erfindungsgemäße Einrichtung 8 ist ein ergänzender bzw. integrierter Bauteil einer Untersuchungseinheit 1 oder ein eigenständiger Bauteil, dessen Ergebnisse über entsprechende Datenleitungen oder auf Diskette abgespeichert der Untersuchungseinheit 1 zugeführt werden. Die Untersuchungseinheit 1 für Symbole 2, so wie sie z.B. in Form von Ziffern und/oder Buchstaben auf Geldscheinen 3 abgebildet sind, dient zur Untersuchung, insbesondere Prüfung und/oder Unterscheidung und/oder Identifizierung von unterschiedlichen Symbolen, z.B. Buchstaben, Zahlen, Kartensymbolen od.dgl. Diese Symbole 2 werden mit einer elektronischen Bildaufnahmeeinheit 4 aufgenommen und sollen untersucht werden. Zu dieser Untersuchung werden, wie bereits eingangs erwähnt, jedoch charakteristische Bildpunkte benötigt, bei deren Untersuchung die entsprechende Rechenzeit möglichst kurz angesetzt werden kann, ohne jedoch einen Verlust an Genauigkeit eintreten zu lassen.

Die Untersuchung bzw. die Korrelation der mit der Aufnahmeeinheit 4 aufgenommenen Symbole 2 erfolgt in einer Istbild-Korrelationseinrichtung 23, die an einen Speicher 7 mit den entsprechenden Korrelations-Bildpunkten, die mit der Einheit 8 ermittelt wurden, verbunden ist. An die Untersuchungseinheit 1 ist eine entsprechende Einrichtung 6 zur Auswertung und/oder zur optischen und/oder akustischen Anzeige der Messergebnisse angeschlossen.

Die erfindungsgemäße Einrichtung 8 besitzt ein elektronisches Bildaufnahmegerät 10, mit dem für jedes der bekannten, vorgegebenen unterschiedlichen Symbole zumindest ein Muster 9 aufgenommen wird. Vorteilhafterweise wird eine Vielzahl von derartigen jeweils geringe zulässige Abweichungen aufweisenden Mustern 9 für jedes Symbol 2 aufgenommen. Im vorliegenden Fall sind für die drei unterschiedlichen Symbole 2 jeweils drei Muster 9 dargestellt, welche untereinander und gegenüber dem tatsächlich vorhandenen und zu überprüfenden Symbol 2 gewisse Abweichungen aufweisen, welche Abweichungen jedoch ausdrücklich als zulässig erachtet wurden. Diese Abweichungen wurden zur Illustration relativ deutlich gewählt. In der Praxis wird eine Vielzahl von Mustern vorgegeben, die gegebenenfalls durch Stichproben ermittelt werden bzw. zufällig aus den vorhandenen Symbolen ausgewählt werden. Zur Speicherung der von einem Symbol 2 aufgenommenen, unterschiedlichen drei Muster sind in der Einheit 8 Template-Speicher 12, 12', 12" vorgesehen. Für jedes zu untersuchende unterschiedliche Symbol 2 ist eine entsprechende Anzahl von Template-Speicher vorhanden.

Allenfalls werden die von der Aufnahmeeinrichtung 10 aufgenommenen Sollbilder in einer Vorverarbeitungseinrichtung 11 einem Vorverarbeitungsschritt unterzogen und abgespeichert.

Jedem Template-Speicher 12, 12', 12" ist ein Korrelations-Bildpunktspeicher 13, 13', 13" und gegebenenfalls ein Korrelationsbildpunkt-Kandidatenspeicher 14, 14', 14" zugeordnet.

Die entsprechenden Rechenschritte werden in einem Prozessor 16 durchgeführt, dem eine Verknüpfungseinheit 15 und eine Prüfeinheit 22 zugeordnet sind. Angeschlossen an dem Prozessor sind des weiteren ein Korrelationsfunktions-Speicher 17 und ein Korrelationsmaßwert-Speicher 18. In dem Korrelationsfunktions-Speicher 17 sind die vorgegebenen und einzusetzenden Korrelationsfunktionen abgespeichert. In dem Korrelationsmaß-Speicher 24 sind die vorgegebenen Korrelationsmaße abgespeichert, die zur Ermittlung der Korrelationsmaßwerte eingesetzt werden.

Des weiteren ist ein Mittelwertbildner 19 vorgesehen bzw. ein Speicher 20, in dem die Maße für die jeweils vorzunehmenden Verschiebungen der Korrelations-Bildpunkte in Hinblick auf die einzelnen Template der unterschiedlichen Template-Kategorien abgespeichert sind.

In einer Sortiereinheit 21 werden die Korrelationsfunktionswerte der einzelnen Template bzw. Template-Kategorien entsprechend ihrer Werte gereiht abgespeichert. Die Sortierung der Korrelationsfunktionswerte bzw. der Template erfolgt in Hinblick auf eine gute Übereinstimmung mit den entsprechenden Bildpunkten der Template in Hinblick auf Template der eigenen Kategorie und eine schlechte Übereinstimmung mit entsprechenden Bildpunkten der Template einer fremden Template-Kategorie.

Es ist verständlich und fällt unter den Rahmen der Erfindung, dass eine Anzahl oder alle der schematisch dargestellten Funktionseinheiten der Einrichtung 8 auch durch entsprechende Software bzw. Programmabläufe verifiziert werden können.

**Patentansprüche**

1. Verfahren zur Erstellung von Korrelationsbildpunktmengen, die zur Untersuchung, Prüfung, Unterscheidung und/ oder Identifizierung von unterschiedlichen Symbolen, z.B. Buchstaben, Zahlen, eingesetzt werden, welche Symbole mit elektronischen Bildaufnahmegeräten aufgenommen werden und in Form von digitalen Ist-Bildern vorliegen, **dadurch gekennzeichnet,**

   - **dass** vorab für jedes Symbol zumindest ein sowie vorzugsweise ein gegenüber dem jeweiligen Symbol differierendes oder zulässige Abweichungen zeigendes Muster oder eine Anzahl derartiger Muster aufgenommen werden und diese jeweils aufgenommenen Soll-Bilder eines jeden Symbols als Templates in eine diesem Symbol zugeordnete, eigene Template-Kategorie eingeordnet werden,
   - **dass** für jede der einzelnen Template-Kategorien eine eigene oder zugehörige Korrelationsbildpunktmenge erstellt wird, indem eine für die jeweilige Template-Kategorie anfänglich vorgegebene Ausgangs-Korrelationsbildpunktmenge sukzessive durch Hinzufügen von zumindest einem Korrelationsbildpunktkandidaten aus einer vorgegebenen Menge von Korrelationsbildpunktkandidaten ergänzt wird,
   - **dass** Bildpunktwerte der Korrelations-Bildpunkte der jeweiligen Ausgangs-Korrelationsbildpunktmenge und des zumindest einen jeweils zugefügten Korrelationsbildpunktkandidaten unter Einsatz einer vorgegebenen oder gewählten Korrelationsfunktion mit Bildpunktwerten von entsprechenden Bildpunkten zumindest eines Templates der zugehörigen sowie der fremden Template-Kategorien verknüpft und die Korrelationsfunktionswerte berechnet werden,
   - **dass** für den zumindest einen hinzugefügten Korrelationsbildpunktkandidaten überprüft wird, ob die ermittelten Korrelationsfunktionswerte der mit diesem zumindest einem Korrelationsbildpunktkandidaten ergänzten Korrelationsbildpunktmenge mit entsprechenden Bildpunkten der Templates der zugehörigen Template-Kategorie eine gute Übereinstimmung und mit entsprechenden Bildpunkten der Templates der fremden Template-Kategorien eine schlechte Übereinstimmung ergeben,
   - **dass** nach Überprüfung der für jede der Template-Kategorien vorgegebenen Menge von Korrelationsbildpunktkandidaten der zumindest eine nach festgelegten Beurteilungs-Kriterien am besten geeignete Korrelationsbildpunktkandidat zur Ausgangs-Korrelationsbildpunktmenge der jeweiligen Template-Kategorie hinzugefügt wird,
   - **dass** für jede Template-Kategorie das jeweilige Hinzufügen zumindest eines weiteren Korrelationsbildpunkt-Kandidaten aus der für sie vorgegebenen Menge der Korrelationsbildpunkt-Kandidaten zu der zuvor mit zumindest einem am besten geeigneten Korrelationsbildpunkt-Kandidaten ergänzten - nunmehr die Ausgangs-Korrelationsbildpunktmenge darstellenden - Korrelationsbildpunktmenge, die jeweilige Überprüfung dieser neu ergänzten Korrelationsbildpunktmengen und die Auswahl und das Hinzufügen des zumindest einen am besten geeigneten Korrelationsbildpunktes zu dieser Korrelationsbildpunktmenge sukzessive fortgesetzt oder solange wiederholt wird, bis ein Abbruchkriterium, z.B. eine geforderte Anzahl von Korrelationsbildpunkten erreicht wird,
   - **dass** bei der Untersuchung der Ist-Bilder der Symbole jedes aufgenommene Ist-Bild jedes einzelnen Symbols mit jeder der für die Template-Kategorien der unterschiedlichen Symbole ermittelten Korrelationsbildpunktmengen korreliert wird und
   - **dass** die damit ermittelten Symbol-Korrelationsfunktionswerte zur Ermittlung der Prüfergebnisse und/oder zur Unterscheidung und/oder zur Identifizierung der Symbole herangezogen werden.

2. Verfahren nach Anspruch 1, **dadurch gekennzeichnet,**

   - **dass** in einem Vorverarbeitungsschritt die in Form digitalisierter Soll-Bilder vorliegenden Templates der Symbole vergrößert werden, wobei gegebenenfalls durch Interpolation der Grauwerte die Grauwerte von weiteren notwendigen bzw. hinzugefügten Bildpunkten erzeugt werden,
   - **dass** kleine Grauwerte durch einen Minimalwert und große Grauwerte durch einen Maximalwert ersetzt werden,
   - **dass** auf jedes so erhaltene Bild ein Mittelwertfilter angewendet wird und das mittelwertgefilterte Bild mit dem vergrößerten ursprünglichen Bild verknüpft, insbesondere von diesem subtrahiert wird,
   - **dass** die resultierenden Bilder binarisiert, vorzugsweise einer Beinahe-Binarisierung unterzogen werden, und
   - **dass** diese binarisierten oder beinahe-binarisierten Bilder als Templates des Symbols in die Template-Kategorie dieses Symbols eingeordnet werden.

3. Verfahren nach Anspruch 1 oder 2, **dadurch gekennzeichnet,**

   - **dass** für den jeweiligen Korrelationsbildpunktkandidaten als Beurteilungs-Kriterium für seine Tauglichkeit, der Ausgangs-Korrelationsbildpunktmenge hinzugefügt zu werden, ein Korrelationsmaßwert ermittelt bzw. errechnet wird, wobei das Korrelationsmaß eine vorgegebene bzw. gewählte Funktion, vorzugsweise das Verhältnis, von dem besten Korrelationsfunktionswert der um den jeweiligen Korrelationsbildpunktkandidaten ergänzten Ausgangs-Korrelationsbildpunktmenge mit den Templates der fremden Template-Kategorien und von dem schlechtesten Korrelationsfunktionswert mit den Templates der zugehörigen Template-Kategorie darstellt,

- **dass** der jeweiligen Ausgangs-Korrelationsbildpunktmenge der einzelnen Template-Kategorien derjenige Korrelationsbildpunktkandidat hinzugefügt wird, für den für diese Template-Kategorie der beste, vorzugsweise größte, Korrelationsmaßwert unter allen untersuchten Korrelationsbildpunktkandidaten der vorgegebenen Menge ermittelt wurde und

- **dass** das sukzessive Hinzufügen von Korrelationsbildpunktkandidaten wiederholt wird, bis ein vorgegebenes Abbruchkriterium erreicht wurde, z.B. die Korrelationsbildpunktmenge eine vorgegebene Anzahl von Korrelations-Bildpunkten enthält oder ein vorgegebener minimaler Korrelationsmaßwert für diese ergänzte Korrelationsbildpunktmenge erreicht wurde.

4. Verfahren nach einem der Ansprüche 1 bis 3, **dadurch gekennzeichnet,**

- **dass** die Template-Kategorie oder das in dieser Template-Kategorie enthaltene Template bestimmt wird, die (das) für die Ausgangs-Korrelationsbildpunktmenge den besten Korrelationsfunktionswert in Bezug auf die Templates aller fremden Template-Kategorien ergeben hat und

- **dass** für jede mit einem Korrelationsbildpunktkandidaten ergänzte Korrelationsbildpunktmenge der Korrelationsfunktionswert für diese Template-Kategorie bzw. für dieses Template zusätzlich ermittelt wird und dieser zusätzlich ermittelte Korrelationsfunktionswert gemeinsam mit dem ermittelten besten und schlechtesten Korrelationsfunktionswert zur Ermittlung des Korrelationsmaßwertes herangezogen wird.

5. Verfahren nach Anspruch 4, **dadurch gekennzeichnet, dass** vor der Anwendung bzw. Ermittlung des Korrelationsmaßes der Korrelationsfunktionswert für die fremden Template-Kategorie und der zusätzlich ermittelte Korrelationsfunktionswert gewichtet und addiert werden.

6. Verfahren nach einem der Ansprüche 1 bis 5, **dadurch gekennzeichnet,**

- **dass** für jede Template-Kategorie ein Mittelwert-Template erstellt bzw. errechnet wird, indem für jede Bildpunkt-Position ein Mittelwert der Grauwerte der Templates dieser Template-Kategorie gebildet wird und

- **dass** die Korrelationsbildpunktkandidaten für diese Template-Kategorie aus diesen Bildpunkten ausgewählt und/oder mit diesen Bildpunkten, z.B. durch Interpolation berechnet werden.

7. Verfahren nach einem der Ansprüche 1 bis 6, **dadurch gekennzeichnet, dass** bei Ermittlung der Korrelationsfunktionswerte der mit einem Korrelationsbildpunktkandidaten ergänzten Korrelationsbildpunktmenge mit den entsprechenden Bildpunkten der Templates der zugehörigen Template-Kategorie zusätzliche Korrelationsfunktionswerte für die in vorgegebenen Richtungen und Abständen zu den entsprechenden Bildpunkten verschoben bzw. versetzt angeordneten Korrelationsbildpunktmengen ermittelt werden oder dass bei Ermittlung der Korrelationsfunktionswerte der mit einem Korrelationsbildpunktkandidaten ergänzten Korrelationsbildpunktmenge mit den entsprechenden Bildpunkten der Templates der fremden Template-Kategorien zusätzliche Korrelationsfunktionswerte für die in vorgegebenen Richtungen und Abständen zu den entsprechenden Bildpunkten verschoben bzw. versetzt angeordneten Korrelationsbildpunktmengen ermittelt werden.

8. Verfahren nach Anspruch 7, **dadurch gekennzeichnet, dass** die Richtung und Abstände für die Verschiebungen der Korrelationsbildpunktmengen für alle zugehörigen Template-Kategorien untereinander gleich sind und für alle fremden Template-Kategorien untereinander gleich sind.

9. Verfahren nach einem der Ansprüche 1 bis 8, **dadurch gekennzeichnet,**

- **dass** die digitalen Ist-Bilder vorverarbeitet sind, und/oder
- **dass** die digitalen Bilder als Grauwertbilder vorliegen, und/oder
- **dass** die Korrelations-Bildpunkte lagemäßig zueinander festgelegt sind, und/oder
- **dass** die Soll-Bilder vorverarbeitet sind, und/oder
- **dass** die Bildpunktwerte der Korrelations-Bildpunkte der entsprechenden Bildpunkte zumindest eines Templates der zugehörigen sowie der fremden Templates-Kategorien dieselbe Lagezuordnung besitzen, und/oder
- **dass** als Korrelationsbildpunktkandidat derjenige mit dem besten Korrelationswert zur Ausgangs-Korrelationsbildpunktmenge hinzugefügt wird.

10. Verfahren nach einem der Ansprüche 1 bis 9, **dadurch gekennzeichnet,**

- **dass** die Templates der eigenen Template-Kategorie, d.h. einer Template-Kategorie, deren Korrelationsbildpunktmenge gerade untersucht wird, und getrennt davon, die Templates aller fremden Template-Kategorien nach der Größe der für die jeweiligen Templates ermittelten Korrelationsfunktionswerte bezüglich der dieser eigenen Template-Kategorie zugeordneten Korrelationsbildpunktmenge sortiert werden,
- **dass** dieser Ausgangs-Korrelationsbildpunktmenge aus der der eigenen Template-Kategorie zugeordneten Menge von Korrelationsbildpunktkandidaten zumindest ein Korrelationsbildpunktkandidat hinzugefügt wird und die Korrelationsfunktionswerte in Bezug auf alle vorhandenen Templates ermittelt werden und mit diesen Korrelationsfunktionswerten durch Anwendung des Korrelationsmaßes ein Ausgangs-Korrelationsmaßwert bestimmt wird,
- **dass** dieser Ausgangs-Korrelationsbildpunktmenge aus der der zu untersuchenden Template-Kategorie zugeordneten Menge von Korrelationsbildpunktkandidaten zumindest ein weiterer Korrelationsbildpunktkandidat hinzugefügt wird und die Korrelationsfunktionswerte der erweiterten Menge mit dem an erster Stelle gereihten Template der eigenen Template-Kategorie und mit dem an letzter Stelle gereihten Template der fremden Template-Kategorien und gegebenenfalls mit dem an letzter Stelle gereihten Template einer zusätzlich ausgewählten, fremden Template-Kategorie ermittelt werden, und mit diesen Korrelationsfunktionswerten ein Korrelationsmaßschätzwert ermittelt wird,
- **dass** - sofern der ermittelte Korrelationsmaßschätzwert besser ist als der Ausgangs-Korrelationsmaßwert - die Untersuchung der Templates fortgesetzt wird, indem für das jeweils dem zuletzt untersuchten Template folgende Template der eigenen und der fremden und gegebenenfalls der zusätzlichen Template-Kategorie die Korrelationsfunktionswerte und ein Korrelationsmaßschätzwert ermittelt werden,

- wobei für die Ermittlung des Korrelationsmaßschätzwertes aus den für die eigene Template-Kategorie bereits ermittelten Korrelationsfunktionswerten der maximale Korrelationsfunktionswert und aus den für die fremden bzw. gegebenenfalls zusätzlichen Template-Kategorien bereits ermittelten Korrelationsfunktionswerten der minimale Korrelationsfunktionswert herangezogen wird,

- **dass** die Ermittlung von weiteren Korrelationsmaßschätzwerten so lange für die einzelnen, der Größe nach gereihten Templates der eigenen Template-Kategorie und aller fremden Template-Kategorien weitergeführt wird, bis ein Abbruchkriterium erreicht wird,

- wobei die Untersuchung weiterer Templates der eigenen bzw. der fremden Template-Kategorien bzw. die Ermittlung weiterer Korrelationsfunktionswerte für einen Korrelationsbildpunktkandidaten unterbleibt und dieser untersuchte Korrelationsbildpunktkandidat aus der Untersuchung ausgeschieden wird, wenn ein für die mit diesem Korrelationsbildpunktkandidaten erweiterte Menge ermittelter Korrelationsmaßschätzwert nicht besser als der Ausgangs-Korrelationsmaßwert ist, oder bis alle Templates untersucht sind,

- **dass** die Untersuchung sodann mit zumindest einem weiteren Korrelationsbildpunktkandidaten derselben Menge in derselben Weise jeweils unter Zugrundelegung des besten bisher ermittelten Korrelationsmaßwertes als Ausgangs-Korrelationsmaßwert fortgesetzt wird, bis alle für die eigene Template-Kategorie vorhandenen Korrelationsbildpunktkandidaten untersucht wurden, worauf der Korrelationsbildpunktkandidat mit dem besten Korrelationsmaßwert der Korrelationsbildpunktmenge hinzugefügt wird, und
- **dass** daraufhin die Untersuchung in der beschriebenen Weise mit der um diese(n) Korrelationsbildpunktkandidaten erweiterten Korrelationsbildpunktmenge als Ausgangs-Korrelationsbildpunktmenge für die eigene Template-Kategorie fortgesetzt wird, bis ein weiteres Abbruchkriterium, z.B. die geforderte Anzahl von Korrelationsbildpunkten in der Korrelationsbildpunktmenge erreicht ist,

- worauf dieselbe Untersuchung in der gleichen Weise für die nächste Template-Kategorie fortgesetzt wird, die nunmehr als die "eigene" Template-Kategorie angesehen wird.

11. Einrichtung zur Erstellung von Korrelationsbildpunktmengen, die zur Untersuchung, Prüfung, Unterscheidung und/ oder Identifizierung von unterschiedlichen Symbolen, z.B. Buchstaben, Zahlen, eingesetzt werden, welche Symbole mit elektronischen Bildaufnahmegeräten aufgenommen werden und in Form von digitalen Ist-Bildern vorliegen, insbesondere zur Durchführung des Verfahrens nach einem der Ansprüche 1 bis 10, **dadurch gekennzeichnet,**

- **dass** zur Speicherung zumindest eines von jedem Symbol (2) aufgenommenen Musters (9) oder einer Anzahl von differierenden oder zulässige Abweichungen zeigenden Mustern (9) zumindest ein Template-Speicher (12, 12', 12") vorgesehen ist, in dem diese jeweils aufgenommenen Soll-Bilder eines Symbols (2) als Templates in eine diesem Symbol zugeordnete Template-Kategorie eingeordnet sind,

- **dass** für jede der für die einzelnen Template-Kategorien erstellten Korrelations-Bildpunktmengen zumindest ein Korrelationsbildpunkt-Speicher (13, 13', 13") und ein Korrelationsbildpunktkandidaten-Speicher (14, 14', 14") vorgesehen sind,

- **dass** ein Prozessor (16) vorgesehen ist, in dem jeweils eine für die jeweilige Template-Kategorie anfänglich vorgegebene Ausgangs-Korrelationsbildpunktmenge sukzessive durch Hinzufügen von jeweils zumindest einem Korrelationsbildpunktkandidaten aus einer vorgegebenen Menge der gespeicherten Korrelationsbildpunkt-Kandidaten ergänzt wird,

- **dass** der Prozessor (16) eine Verknüpfungseinheit (15) umfasst, in der Bildpunktwerte der Korrelations-Bildpunkte der jeweiligen Ausgangs-Korrelationsbildpunktmenge und des zumindest einen jeweilig zugefügten Korrelationsbildpunktkandidaten unter Einsatz einer vorgegebenen Korrelationsfunktion mit Bildpunktwerten von entsprechenden Bildpunkten zumindest eines Templates der zugehörigen sowie der fremden Template-Kategorien verknüpft und die Korrelationsfunktionswerte berechnet werden,

- **dass** der Prozessor (16) eine Prüfeinheit (22) umfasst, in der für den zumindest einen jeweiligen Korrelationsbildpunktkandidaten überprüft wird, ob die ermittelten Korrelationsfunktionswerte der mit diesem Korrelationsbildpunktkandidaten ergänzten Korrelationsbildpunktmenge mit entsprechenden Bildpunkten der Templates der zugehörigen Template-Kategorie eine gute Übereinstimmung und mit entsprechenden Bildpunkten der Templates der fremden Template-Kategorien eine schlechte Übereinstimmung ergeben,

- **dass** vom Prozessor (16) nach Überprüfung der für jede der Template-Kategorien vorgegebenen Menge von Korrelationsbildpunktkandidaten zumindest ein nach festgelegten Beurteilungs-Kriterien am besten geeigneter Korrelationsbildpunktkandidat zur Ausgangs-Korrelationsbildpunktmenge der jeweiligen Template-Kategorie hinzugefügt wird, und

- **dass** das Hinzufügen zumindest eines weiteren Korrelationsbildpunktkandidaten aus der vorgegebenen Menge zu der zuvor mit zumindest einem am besten geeigneten Korrelationsbildpunktkandidaten ergänzte Korrelationsbildpunktmenge sukzessive fortgesetzt wird, bis ein Abbruchkriterium erreicht ist.

**12.** Einrichtung nach Anspruch 11, **dadurch gekennzeichnet,**

- **dass** der Prozessor (16) eine Korrelationsmaßwert-Ermittlungseinheit umfasst, mit der die für jede Template-Kategorie anfänglich vorgegebene Ausgangs-Korrelationsbildpunktmenge sukzessive jeweils mit zumindest einem Korrelationsbildpunktkandidaten erweitert wird, indem für den jeweiligen Korrelationsbildpunktkandidaten als Beurteilungs-Kriterium für seine Tauglichkeit, der Ausgangs-Korrelationsbildpunktmenge hinzugefügt zu werden, ein Korrelationsmaßwert ermittelt bzw. errechnet wird, wobei das Korrelationsmaß eine Funktion, vorzugsweise das Verhältnis, von dem besten Korrelationsfunktionswert der um den jeweiligen Korrelationsbildpunktkandidaten ergänzten Ausgangs-Korrelationsbildpunktmenge mit den Templates der fremden Template-Kategorie und von dem schlechtesten Korrelationsfunktionswert mit den Templates der zugehörigen Template-Kategorie darstellt,

- **dass** der Prozessor (16) der jeweiligen Ausgangs-Korrelationsbildpunktmenge der einzelnen Template-Kategorien diejenigen Korrelationsbildpunkt-Kandidaten hinzufügt, für die für diese Template-Kategorie der beste, vorzugsweise größte, Korrelationsmaßwert unter allen untersuchten Korrelationsbildpunktkandidaten der vorgegebenen Menge ermittelt wurde und

- **dass** der Prozessor (16) das sukzessive Hinzufügen von Korrelationsbildpunktkandidaten wiederholt, bis ein vorgegebenes Abbruchkriterium erreicht wurde, z.B. eine vorgegebene Anzahl von Korrelations-Bildpunkten in der Korrelationsbildpunktmenge oder ein vorgegebener minimaler Korrelationsmaßwert für die ergänzte Korrelationsbildpunktmenge.

**13.** Einrichtung nach Anspruch 11 oder 12, **dadurch gekennzeichnet, dass** der Prozessor (16) eine Einheit (21), z.B. Vergleicher, zur Bestimmung des besten Korrelationsfunktionswertes und des schlechtesten Korrelationsfunktionswertes der Templates und Korrelationsbildpunktmengen und/oder einen Korrelationsfunktionsspeicher (17) für die Speicherung von Korrelationsfunktionen umfasst.

**Claims**

**1.** Method for producing correlation sets of pixels which are used for investigation, examination, distinction and/or identification of different symbols, e.g. letters, numbers, said symbols being taken by electronic image taking appliances and existing in the form of digital actual images, **characterised in**

- **that** for each symbol at least one, as well as preferably a pattern or a number of such patterns are first taken which either differ from the respective symbol or show permissible differences, and that these respectively taken nominal images of each symbol are classified as templates into a separate template category associated to this symbol,
- **that** a separate and associated correlation set of pixels is established for each one of the individual template categories by completing successively a starting correlation set of pixels given initially for the respective template category by adding at least one correlation pixel candidate of a predetermined set of correlation pixel candidates,
- **that** pixel values of the correlation pixels of the respective starting correlation set of pixels and of the at least one respectively added correlation pixel candidate are combined and the correlation function values are calculated using a predetermined or selected correlation function including pixel values from corresponding pixels of at least one template of the associated as well as of the foreign template categories,
- **that** it is checked for said at least one added correlation pixel candidate, whether the determined correlation function values of the correlation set of pixels, completed by said at least one correlation pixel candidate, result in a good correspondence with corresponding pixels of the template of the associated template category, while resulting in a bad correspondence with corresponding pixels of the template of the foreign template category,
- **that** after checking the set of correlation pixel candidates, given for each one of the template categories, that at least one correlation pixel candidate, which is best adapted according to fixed assessment criteria, is added to the starting correlation set of pixels of the respective template category,
- **that** for each template category respectively adding at least one further correlation pixel candidate from a set of correlation pixel candidates given for it to the correlation set of pixels, which has previously been completed by at least one best adapted correlation pixel candidate and represents now the starting correlation set of pixels, the examination of these correlation sets of pixels newly completed as well as the selection and adding at least one best adapted correlation pixel to this correlation set of pixels are successively continued or are repeated up to the moment when a termination criterion, e.g. a requested number of correlation pixels, has been reached,
- **that**, during investigation of the actual images of the symbols, each taken actual image of each individual symbol is correlated with each one of the correlation sets of pixels determined for the template categories of different symbols, and
- **that** the, thus, determined symbol correlation function values are used for determining the examination results and/or for distinction and/or identification of the symbols.

2. Method according to claim 1, **characterised in**

- **that**, in a pre-processing step, the templates of the symbols, which exist in the form of digitised actual images, are enlarged, the grey values of further necessary or added pixels being optionally produced by interpolation of the grey values,
- **that** small grey values are replaced by a minimum value, while large grey values are replaced by a maximum value,
- **that** a mean value filter is used for each image thus obtained, and that the mean value filtered image is combined with the enlarged initial image, and is in particular subtracted from it,
- **that** the resulting images are binarised, and are preferably subjected to a nearly binarisation, and
- **that** these binarised or nearly binarised images are classified as templates of the symbol into the template category of this symbol.

3. Method according to claim 1 or 2, **characterised in**

- **that** a correlation measuring value is determined or calculated for the respective correlation pixel candidate as an assessment criterion of its suitability to be added to the starting correlation set of pixels, said correlation measure representing a given or selected function, preferably the relationship, of the best correlation function value of the starting correlation set of pixels, completed by the respective correlation pixel candidate, with the templates of the foreign template categories, and of the worst correlation function value with the templates of the associated template category,
- **that** that correlation pixel candidate is added to the respective starting correlation set of pixels of the individual template categories, for which that correlation measuring value among all investigated correlation pixel candidates of the given set has been determined, which is the best, preferably the largest, for this template category, and

- **that** successive adding of correlation pixel candidates is repeated up to the moment when a termination criterion, e.g. that correlation set of pixels which contains a predetermined number of correlation pixels, or a predetermined minimum correlation measuring value for this completed correlation set of pixels has been reached.

**4.** Method according to any of claims 1 to 3, **characterised in**

- **that** that template category or the template contained in this template category is determined, which has resulted in the best correlation function value for the starting correlation set of pixels with respect to the templates of all foreign template categories, and
- **that**, for each correlation set of pixels completed by a correlation pixel candidate, the correlation function value for this template category or for this template is determined in addition, and this additionally determined correlation function value is used in conjunction with the determined best and worst correlation function value for determining the correlation measuring value.

**5.** Method according to claim 4, **characterised in that** the correlation function value for the foreign template category and the additionally determined correlation function value are weighted and added prior to the application or determination of the correlation measure.

**6.** Method according to any of claims 1 to 5, **characterised in**

- a mean value template is established or calculated for each template category by forming a mean value of the grey values of the templates of this template category for each pixel position, and
- that the correlation pixel candidates for this template category are selected among these pixels and/or are calculated by these pixels, e.g. by interpolation.

**7.** Method according to any of claims 1 to 6, **characterised in that**, when determining the correlation function values of the correlation set of pixels completed by a correlation pixel candidate, either additional correlation function values for those correlation sets of pixels are determined by the corresponding pixels of the template of the associated template category, which are displaced or offset in predetermined directions and distances to the corresponding pixels, or that, when determining the correlation function values of the correlation set of pixels completed by a correlation pixel candidate, additional correlation function values, which are displaced or offset in predetermined directions and distances to the corresponding pixels, are determined by the corresponding pixels of the templates of the foreign template categories.

**8.** Method according to claim 7, **characterised in that** the direction and the distances for the displacement of the correlation sets of pixels are equal among each other for all associated template categories and are equal among each other for all foreign template categories.

**9.** Method according to any of claims 1 to 8, **characterised in**

- **that** the digital actual images are pre-processed, and/or
- **that** the digital images are present as grey value images, and/or
- **that** the correlation pixels are fixed in position relative to each other, and/or
- the nominal images are pre-processed, and/or
- **that** the pixel values of the correlation pixels of the corresponding pixels of at least one template of the associated as well as of the foreign template categories have the same position co-ordination, and/or
- **that**, as a correlation pixel candidate, that one having the best correlation value is added to starting correlation set of pixels.

**10.** Method according to any of claims 1 to 9, **characterised in**

- the templates of the own template category, i.e. of a template category whose correlation set of pixels is just investigated, and, separately from it, the templates of all foreign template categories are sorted with respect to the correlation set of pixels associated to this own template category according to the size of the correlation function values determined for the respective templates,
- that at least one correlation pixel candidate among the set of correlation pixel candidates associated to the own template category is added to this starting correlation set of pixels, and the correlation function values are determined with respect to all existing templates, and, applying the correlation measure, a starting correlation measuring value is determined by these correlation function values,

- that at least one further correlation pixel candidate from the set of correlation pixel candidates associated to the template category to be investigated is added to this starting correlation set of pixels, and that the correlation function values of the enlarged set are determined, having the template of the own template category strung to the first position and the template of the foreign template categories strung to the last position and, optionally, having the template of an additionally selected foreign template category strung to the last position, and a correlation measure estimated value is determined by these correlation function values,

- that the investigation of the template is continued, when the determined correlation measure estimated value is better than the starting correlation measuring value, by determining the correlation function values and a correlation measure estimated value for the template of the own and of the foreign, and optionally of the additional template category which respectively follows the last investigated template,

- the maximum correlation function value being employed for determining the correlation measure estimated value from the correlation function values already determined for the own template category, and the minimum correlation function value being employed from the correlation function values already determined for the foreign or, optionally, additional template categories,

- that determining of further correlation measure estimated values is continued as long for the individual, templates of the own template category strung according to size and of all other foreign template categories up to reaching a termination criterion,

- the investigation of further templates of the own or of foreign template categories and/or determining further correlation function values for a correlation pixel candidate being stopped, and this investigated correlation pixel candidate being excluded from investigating, if a correlation measure estimated value, determined for the set enlarged by this correlation pixel candidate, is not better than the starting correlation measuring value, or up to the moment when all templates have been investigated,

- that the investigation is then continued in the same manner with at least one further correlation pixel candidate of the same set, each on the base of the best correlation measuring value determined up to now as a starting correlation measuring value, up to the moment when all correlation pixel candidates existing for the own template category have been investigated, after which the correlation pixel candidate having the best correlation measuring value is added to the correlation set of pixels, and

- that after that the investigation is continued in the manner described with the correlation set of pixels enlarged by this (these) correlation pixel candidate(s) as a starting correlation set of pixels for the own template category, up to reaching a further termination criterion, e.g. the required number of correlation pixels in the correlation set of pixels,

- after which the same investigation is continued in the same manner for the next template category, which is now considered to be the "own" template category.

11. Apparatus for producing correlation sets of pixels which are used for investigation, examination, distinction and/or identification of different symbols, e.g. letters, numbers, said symbols being taken by electronic image taking appliances and existing in the form of digital actual images, particularly for carrying out the method according to any of claims 1 to 10, **characterised in**

- **that** for memorising at least one pattern (9) taken from each symbol (2) or a number of differing patterns (9) or showing permissible differences, at least one template memory (12, 12', 12") is provided, in which these nominal images respectively taken of a symbol (2) are classified as templates into a template category associated to this symbol,

- **that**, for each one of the correlation sets of pixels established for the individual template categories, at least one correlation pixel memory (13, 13', 13") and a correlation pixel candidate memory (14, 14', 14") are provided,

- **that** a processor (16) is provided in which a starting correlation set of pixels each initially given for the respective template category is successively completed by adding at least one correlation pixel candidate each of a predetermined set of memorised correlation pixel candidates,

- **that** the processor (16) comprises a combination unit (15) in which pixel values of the correlation pixels of the respective starting correlation set of pixels and of the at least one correlation pixel candidate respectively added are combined using a predetermined correlation function comprising pixel values of corresponding pixels of at least one template of the associated as well as of foreign template categories, and the correlation function values are calculated,

- **that** the processor (16) comprises an examination unit (22) in which it is checked for the at least one respective correlation pixel candidate, whether the determined correlation function values of the correlation set of pixels, completed by this correlation pixel candidate, result in a good correspondence with corresponding pixels of the template of the associated template category, while resulting in a bad correspondence with corresponding pixels of the template of the foreign template category,

- **that** at least one correlation pixel candidate best suited according to fixed assessment criteria is added to the starting correlation set of pixels of the respective template category by the processor (16), after checking the set of correlation pixel candidates, given for each one of the template categories, and

- **that** adding at least one further correlation pixel candidate of the predetermined set to the correlation set of pixels previously completed by at least one best suited correlation pixel candidate is successively continued up to reaching a termination criterion.

**12.** Apparatus according to claim 11, **characterised in**

- **that** the processor (16) comprises a determination unit for the correlation measuring value by which the starting correlation set of pixels initially given for each template category is successively enlarged each time by at least one correlation pixel candidate by determining or calculating a correlation measuring value as an assessment criterion of the respective correlation pixel candidate for its suitability to be added to the starting correlation set of pixels, the correlation measure representing a function, preferably the relationship, of the best correlation function value of the starting correlation set of pixels, completed by the respective correlation pixel candidate with the templates of the foreign template categories, and of the worst correlation function value with the templates of the associated template category,

- **that** the processor (16) adds those correlation pixel candidates to the respective starting correlation set of pixels of the individual template categories, for which that correlation measuring value among all investigated correlation pixel candidates of the given set has been determined, which is the best, preferably the largest, for this template category, and

- **that** the processor (16) repeats successive adding of correlation pixel candidates up to reaching a predetermined termination criterion, e.g. a predetermined number of correlation pixels in the correlation set of pixels, or a predetermined minimum correlation measuring value for the completed correlation set of pixels.

**13.** Apparatus according to claim 11 or 12, **characterised in that** the processor (16) comprises a unit (21), e.g. a comparator, for determining the best correlation function value and the worst correlation function value of the templates and correlation sets of pixels and/or a correlation function memory (17) for memorising correlation functions.

## Revendications

**1.** Méthode pour produire des ensembles de corrélations de points d'image, qui sont utilisés pour l'investigation, l'examen, la discrimination et/ou l'identification des symboles différents, par exemple des lettres, des chiffres, lesdits symboles étant enregistrés par des appareils électroniques de prise de vues et existant en forme des images effectifs numériques, **caractérisée en ce**

- **que** l'on enregistre d'abord pour chaque symbole au moins un dessin ou un nombre de tels dessins, ainsi que de préférence un autre, qui diffère par rapport au symbole respectif ou montre des différences permissibles, et on classifie ces images nominaux pris respectivement de chaque symbole comme des gabarits dans une catégorie de gabarit séparée, associée à ce symbole,

- **qu'**un ensemble séparé ou associé de corrélations de points d'image est établi pour chacune des catégories de gabarit individuelles en complètant successivement un ensemble initial de corrélations de points d'image prédéterminé pour la catégorie de gabarit respective par l'addition d'au moins un candidat de corrélations de points d'image d'un ensemble donné des candidats de corrélations de points d'image,

- **que** l'on combine des valeurs de points d'image des points d'image de corrélation de l'ensemble initial respectif de corrélations de points d'image et d'au moins un candidat de corrélations de points d'image ajouté respectivement en utilisant une fonction de corrélation prédéterminée ou choisie avec des valeurs de points d'image des points d'image correspondants d'au moins un gabarit des catégories de gabarit associées et étrangères, et on calcule les valeurs de fonction de corrélation,

- **que** l'on contrôle l'au moins un candidat de corrélations de points d'image ajouté, si les valeurs de fonction de corrélation déterminés de l'ensemble de corrélations de points d'image complété par cet au moins un candidate de corrélations de points d'image donnent une bonne compatibilité avec les points d'image correspondants du gabarit de la catégorie de gabarit associée, et une mauvaise compatibilité avec les points d'image correspondants du gabarit de la catégorie de gabarit étrangère,

- **que** l'on ajoute l'au moins un candidate de corrélations de points d'image le mieux apte selon des critères d'évaluation fixés à l'ensemble initial de corrélations de points d'image de la catégorie de gabarit respective après l'examen des candidates de corrélations de points d'image de l'ensemble donné pour chacune des catégories de gabarit,

- **que** l'on continue successivement l'adjonction d'au moins un candidate de corrélations de points d'image pour chaque catégorie de gabarit parmi l'ensemble, donné pour elle, des candidates de corrélations de points d'image à l'ensemble de corrélations de points d'image préalablement complété par au moins un candidate de corrélations de points d'image le mieux apte, qui représente maintenant l'ensemble initial de corrélations de points d'image, l'examen respectif de ces ensembles de corrélations de points d'image complété de nouveau et la sélection et l'adjonction du au moins un point d'image de corrélation à cet ensemble de corrélations de points d'image ou on les répète tant qu'un critère d'arrêt, par exemple un nombre requis de points d'image de corrélation, ait été atteint,

- **que**, lors de l'investigation des images effectifs des symboles, chaque image pris effectivement de chaque symbole individuel est mis en corrélation avec chacun des ensembles de corrélations de points d'image déterminés pour les catégories de gabarit des symboles différents, et

- **que** l'on utilise les valeurs de fonction de corrélation de symboles ainsi déterminés pour déterminer les résultats d'examen et/ou pour la discrimination et/ou l'identification des symboles.

2. Méthode selon la revendication 1, **caractérisée en ce**

- **que** l'on agrandi les gabarits existants en forme des images nominaux numérisés des symboles dans une étape d'un traitement préalable, le cas échéant en produisant des valeurs de gris des points d'image ultérieurs nécessaires ou ajoutés par une interpolation des valeurs de gris,

- **que** des valeurs de gris petites sont remplacés par une valeur minimale et des valeurs de gris grandes par une valeurs maximale,

- **que** l'on applique un filtre de valeur moyenne à chaque image ainsi obtenu, et que l'on combine l'image filtré à valeur moyenne avec l'image initial agrandi, particulièrement en le soustrayant de ceci,

- **que** l'on met les images résultants en code binaire, préférablement en les soumettant à une presque-binarisation, et

- **que** ces images binarisés ou presque-binarisés sont classifiés comme des gabarits du symbole dans la catégorie de gabarit de ce symbole.

3. Méthode selon la revendication 1 ou 2, **caractérisée en ce**

- **que** l'on détermine ou calcule une valeur de mesure de corrélation comme un critère d'évaluation de l'aptitude du candidate respectif de corrélations de points d'image d'être ajouté à l'ensemble initial de corrélations de points d'image, ladite valeur de mesure de corrélation représentant une fonction prédéterminé ou choisie, préférablement le rapport, de la valeur de fonction de corrélation la plus meilleure de l'ensemble initial de corrélations de points d'image complété par le candidate respectif de corrélations de points d'image avec les gabarits des catégories étrangères de gabarits, et de la valeur de fonction de corrélation la plus mauvaise avec les gabarits de la catégorie associée de gabarits,

- **que** l'on ajoute ce candidate de corrélations de points d'image à l'ensemble initial respectif de corrélations de points d'image des catégories de gabarit individuelles, pour lequel on a déterminé pour cette catégorie des gabarit la meilleure, préférablement la plus grande, valeur de mesure de corrélation parmi tous les candidates de corrélations de points d'image de l'ensemble donné, et

- **que** l'on répète l'adjonction successive des candidates de corrélations de points d'image, jusqu'à ce qu'on atteigne un critère d'arrêt prédéterminé, par exemple jusqu'à ce que l'ensemble de corrélations de points d'image contienne un nombre prédéterminé des points d'image de corrélation ou on atteigne une valeur de mesure de corrélation minimale prédéterminée pour cet ensemble de corrélations de points d'image complété.

4. Méthode selon une quelconque des revendications 1 à 3, **caractérisée en ce**

- **que** l'on détermine cette catégorie de gabarit ou ce gabarit contenu dans cette catégorie de gabarit, qui a donné pour l'ensemble initial de corrélations de points d'image la valeur de fonction de corrélation la plus meilleure par rapport aux gabarits de tous les catégories étrangères de gabarit, et

- **que** l'on détermine additionnellement pour chaque ensemble de corrélations de points d'image complété par un candidate de corrélations de points d'image la valeur de fonction de corrélation pour cette catégorie de gabarit ou pour ce gabarit, et que cette valeur de fonction de corrélation additionnellement déterminée est utilisée conjointement avec la meilleure et la plus mauvaise valeur de fonction de corrélation pour déterminer la valeur de mesure de corrélation.

5. Méthode selon la revendication 4, **caractérisée en ce que** la valeur de fonction de corrélation pour la catégorie étrangère de gabarit et la valeur de fonction de corrélation additionnellement déterminée sont pondérées et additionnées avant l'application ou avant la détermination de la mesure de corrélation.

6. Méthode selon une quelconque des revendications 1 à 5, **caractérisée en ce**

- **que** l'on établit ou calcule pour chaque catégorie de gabarit un gabarit de valeur moyenne en formant pour chaque position de point d'image une valeur moyenne des valeurs de gris des gabarits de cette catégorie de gabarit, et
- **que** l'on choisit les candidates de corrélation de points d'image pour cette catégorie de gabarit parmi ces points d'image et/ou on les calcule avec ces points d'image, par exemple par une interpolation.

7. Méthode selon une quelconque des revendications 1 à 6, **caractérisée en ce que**, lors de la détermination des valeurs de fonction de corrélation de l'ensemble de corrélations de points d'image complété par un candidate de corrélation de points d'image, on détermine des valeurs additionnelles de fonction de corrélation avec les points d'image correspondants des gabarits de la catégorie de gabarit associée pour les ensembles de corrélations de points d'image déplacés ou décalés en directions et distances prédéterminées aux points d'image correspondants, ou que, lors de la détermination des valeurs de fonction de corrélation de l'ensemble de corrélations de points d'image complété par un candidate de corrélation de points d'image, on détermine des valeurs additionnelles de fonction de corrélation avec les points d'image correspondants des gabarits des catégories de gabarit étrangères pour les ensembles de corrélations de points d'image déplacés ou décalés en directions et distances prédéterminées aux points d'image correspondants.

8. Méthode selon la revendication 7, **caractérisée en ce que** la direction et les distances des déplacements des ensembles de corrélations de points d'image sont égaux entre eux pour tous les catégories de gabarit associées et sont égaux entre eux pour tous les catégories de gabarit étrangères.

9. Méthode selon une quelconque des revendications 1 à 8, **caractérisée en ce**

- **que** les images numériques effectifs sont préalablement traités, et/ou
- **que** les images numériques existent comme des images de valeurs de gris, et/ou
- **que** les positions des points d'image de corrélation sont fixées relativement l'un à l'autre, et/ou
- **que** les images numériques nominaux sont préalablement traités, et/ou
- **que** les valeurs de points d'image des points d'image de corrélation des points d'image correspondants d'au moins un gabarit de la catégorie de gabarit associée ainsi que des catégories de gabarit étrangères ont la même coordination de position, et/ou
- **que** l'on ajoute à l'ensemble initial de corrélations de points d'image, comme candidate de corrélations de points d'image, celui-ci, qui a la meilleure valeur de corrélation.

10. Méthode selon une quelconque des revendications 1 à 9, **caractérisée en ce**

- **que** l'on trie les gabarits de la propre catégorie de gabarit, ça veut dire d'une catégorie de gabarit dont l'ensemble de corrélations de points d'image est justement étudié, et séparé de ça les gabarits de tous les catégories étrangères de gabarit selon la grandeur des valeurs de fonction de corrélation déterminées pour les gabarits respectifs relativement à l'ensemble de corrélations de points d'image associé à cette propre catégorie de gabarit,
- **que** l'on ajoute à cet ensemble initial de corrélations de points d'image au moins un candidate de corrélations de points d'image de l'ensemble des candidates de corrélations de points d'image associé à la propre catégorie de gabarit, que l'on détermine les valeurs de fonction de corrélation par rapport à tous les gabarits existants, et on détermine avec ces valeurs de fonction de corrélation une valeur initiale de mesure de corrélation en appliquant la mesure de corrélation,
- **que** l'on ajoute à cet ensemble initial de corrélations de points d'image au moins un autre candidate de corrélations de points d'image de l'ensemble des candidates de corrélations de points d'image associé à la catégorie de gabarit à étudier, et que l'on détermine les valeurs de fonction de corrélation de l'ensemble élargi, en disposant en premier ordre les gabarits de la propre catégorie de gabarit et en dernier ordre les gabarits des catégories étrangères de gabarit et, le cas échéant, en disposant en dernier ordre les gabarits d'une catégorie étrangère de gabarit, qui a été choisi additionnellement, et que l'on détermine avec ces valeurs de fonction de corrélation une valeur estimative de la mesure de corrélation,

- **que**, quand la valeur estimative de la mesure de corrélation est meilleure que la valeur initiale de mesure de corrélation, on continue l'investigation des gabarits en déterminant les valeurs de fonction de corrélation et une valeur estimative de la mesure de corrélation pour les gabarits, respectivement suivant au gabarit étudié le dernier, des catégories propre et étrangères et, le cas échéant, additionnelle,

- en utilisant, pour déterminer la valeur estimative de la mesure de corrélation, la valeur maximale de fonction de corrélation des valeurs de fonction de corrélation déjà déterminée pour la propre catégorie de gabarit, et la valeur minimale de fonction de corrélation des valeurs de fonction de corrélation déjà déterminée pour les catégories de gabarit étrangères et, le cas échéant, additionnelle,

- **que** la détermination des valeurs estimatives ultérieures de la mesure de corrélation est continuée si longtemps pour les gabarits individuels, disposés en ordre de grandeur, de la propre catégorie de gabarit et de tous les catégories étrangères de gabarit, jusqu'à ce qu'on atteigne un critère d'arrêt,

- en cessant l'investigation des gabarits ultérieurs de la propre catégorie et des catégories étrangères de gabarit ou la détermination des valeurs de fonction de corrélation pour un candidate de corrélations de points d'image, et en éliminant ce candidate étudié de corrélations de points d'image de l'investigation, si une valeur estimative de la mesure de corrélation déterminée pour l'ensemble élargi par ce candidate de corrélations de points d'image n'est pas meilleure que la valeur initiale de mesure de corrélation, ou jusqu'à ce que tous les gabarits soient étudiés,

- **que** l'on continue puis de même manière l'investigation avec au moins un autre candidate de corrélations de points d'image du même ensemble respectivement à la base de la meilleure valeur de mesure de corrélation déterminée jusqu'à présent comme valeur initiale de mesure de corrélation, jusqu'à ce qu'on ait étudié tous les candidates de corrélations de points d'image pour la propre catégorie de gabarit, après quoi on ajoute le candidate de corrélations de points d'image, ayant la meilleure valeur de mesure de corrélation, à l'ensemble de corrélations de points d'image, et

- **que** l'on continue après l'investigation pour la propre catégorie de gabarit de la manière décrite avec l'ensemble de corrélations de points d'image élargi par ce(s) candidate(s) de corrélations de points d'image comme ensemble initial de corrélations de points d'image, jusqu'à ce qu'on atteigne un autre critère d'arrêt, par exemple le nombre requise des points d'image de corrélation dans l'ensemble de corrélations de points d'image,

- après quoi la même investigation est continue de même manière pour la prochaine catégorie de gabarit, qui est maintenant considérée comme la «propre» catégorie de gabarit.

11. Appareil pour produire des ensembles de corrélations de points d'image, qui sont utilisés pour l'investigation, l'examen, la discrimination et/ou l'identification des symboles différents, par exemple des lettres, des chiffres, lesdits symboles étant enregistrés par des appareils électroniques de prise de vues et existant en forme des images effectifs numériques, particulièrement pour la réalisation de la méthode selon une quelconque des revendications 1 à 10, **caractérisée en ce**

- **que**, pour mémoriser au moins un dessin (9) pris de chaque symbole (2) ou un nombre de dessins (9) différents ou montrant des divergences permissibles, au moins un mémoire de gabarit (12, 12', 12") est prévu, dans lequel ces images nominaux pris respectivement d'un symbole (2) sont classifiés comme des gabarits dans une catégorie de gabarit associée à ce symbole,

- **que**, pour chacune des ensembles de corrélations de points d'image établi pour les catégories de gabarit individuelles, au moins un mémoire de points d'image de corrélation (13, 13', 13") et un mémoire des candidates de corrélations de points d'image (14, 14', 14") sont prévus,

- **qu'**un processeur (16) est prévu, dans lequel un ensemble initial de corrélations de points d'image respectif, initialement donné pour la catégorie de gabarit respective est successivement complété par adjonction d'au moins un candidate respectif de corrélations de points d'image d'un ensemble prédéterminé des candidates de corrélations de points d'image mémorisés,

- **que** le processeur (16) comprend une unité de combinaison (15), dans laquelle des valeurs de points d'image des points d'image de corrélation de l'ensemble initial de corrélations de points d'image respectif et du au moins un candidate de corrélations de points d'image respectivement ajouté sont combinés avec des valeurs de points d'image des point d'image correspondants d'au moins un gabarit de la catégorie de gabarit associée et des catégories de gabarit étrangères en utilisant une fonction de corrélation prédéterminé, et que l'on calcule les valeurs de fonction de corrélation,

- **que** le processeur (16) comprend une unité d'examen (22), dans laquelle on contrôle pour l'au moins un candidate respectif de corrélations de points d'image, si les valeurs de fonction de corrélation déterminées de l'ensemble de corrélations de points d'image complété par ce candidate de corrélations de points d'image donnent une bonne concordance avec des points d'image correspondants des gabarits de la catégorie associée de gabarit, et une mauvaise concordance avec des points d'image correspondants des gabarits des catégories étrangères de gabarit,

- **qu'**au moins un candidate de corrélations de points d'image mieux apte selon des critères d'évaluation, après contrôle de l'ensemble donné des candidates de corrélation de points d'image pour chacune des catégories de gabarit, est ajouté par le processeur (16) à l'ensemble initial de corrélations de points d'image de la catégorie de gabarit respective, et

- **que** l'adjonction d'au moins un autre candidate de corrélations de points d'image de l'ensemble donné à l'ensemble de corrélations de points d'image préalablement complété par au moins un candidate de corrélations de points d'image mieux apte est successivement continuée, jusqu'à ce qu'on atteigne un critère d'arrêt.

**12.** Appareil selon la revendication 11, **caractérisé en ce**

- le processeur (16) comprend une unité de détermination d'une valeur de mesure de corrélation, avec laquelle l'ensemble initial de corrélations de points d'image donné initialement pour chaque catégorie de gabarit est successivement élargi respectivement par au moins un candidate de corrélations de points d'image, en déterminant ou calculant une valeur de mesure de corrélation comme un critère d'évaluation de son aptitude d'être ajouté à l'ensemble initial de corrélations de points d'image, la mesure de corrélation représentant une fonction, préférablement le rapport, de la meilleure valeur de fonction de corrélation de l'ensemble initial de corrélations de points d'image complété par le candidate respectif de corrélations de points d'image avec les gabarits de la catégorie étrangère de gabarit et de la mauvaise valeur de fonction de corrélation avec les gabarits de la catégorie associée de gabarit,

- que le processeur (16) ajoute à l'ensemble initial respectif de corrélations de points d'image des catégories individuelles de gabarit ces candidates de corrélations de points d'image, pour lesquels on a déterminé, pour cette catégorie de gabarit, la meilleure, préférablement la plus grande, valeur de mesure de corrélation parmi tous les candidates de corrélations de points d'image étudiés de l'ensemble donné, et

- que le processeur (16) répète l'adjonction successive des candidates de corrélations de points d'image, jusqu'à ce qu'on atteigne un critère d'arrêt prédéterminé, par exemple un nombre prédéterminé des points d'image de corrélation de l'ensemble de corrélations de points d'image ou une valeur de mesure de corrélation minimale prédéterminée pour l'ensemble de corrélations de points d'image complété.

**13.** Appareil selon la revendication 11 ou 12, **caractérisé en ce que** le processeur (16) comprend une unité (21), par exemple un comparateur, pour déterminer la meilleure valeur de fonction de corrélation et la plus mauvaise valeur de fonction de corrélation du gabarit et des ensembles de corrélations de points d'image, et/ou un mémoire de fonction de corrélation (17) pour mémoriser des fonctions de corrélation.

Start der Bildvorverarbeitung.

Für jedes Template:

Vergrößerung des Templates. Die Grauwerte der neuen Bildpunkte werden mittels linearer Interpolation berechnet.

Sehr kleine Grauwerte werden durch einen Minimalwert und sehr großen Grauwerte durch einen Maximalwert ersetzt.

Glätten des Bildes durch Anwenden eines Mittelwertfilters.

Berechnung des Differenzbildes aus vergrößertem Template und geglättetem Bild.

Transformieren der Grauwerte des Differenzbildes.

Weitere Templates?   ja

nein

Ende der Bildvorverarbeitung.

**Fig. 1**

**Fig. 2**

Fig. 3

Start der Berechnung der Korrelationspunkte.

Für alle Template-Kategorien $z$:

Für alle zu berechnenden Korrelationspunkte:

Für alle Korrelationspunkt-Kandidaten:

Berechne den schlechtesten Korrelationswert für die Templates zur Template-Kategorie $z$.

Berechne den besten Korrelationswert für die Templates, die nicht zur Template-Kategorie $z$ gehören.

Berechne den kleinsten Korrelationswert für das Template, das nicht zur Template-Kategorie $z$ gehört und beim vorigen Korrelationspunkt den kleinsten Korrelationswert aufwies.

Berechne das Korrelationsmaß.

Weitere Korrelationspunkt-Kandidaten?  ja

nein

Der Korrelationspunkt-Kandidat mit dem größten Korrelationsmaß ist der neue Korrelationspunkt.

Weitere Korrelationspunkte berechnen?  ja

nein

Weitere Template-Kategorien?  ja

nein

Ende der Berechnung der Korrelationspunkte.

**Fig. 4**

```
┌─────────────────────────────────────────────────────────┐
│   Start der optimierten Berechnung der Korrelationspunkte. │
└─────────────────────────────────────────────────────────┘
                            ↓
┌─────────────────────────────────────────────────────────┐
│            Für alle Template-Kategorien z:                 │◄──┐
└─────────────────────────────────────────────────────────┘   │
                            ↓                                   │
┌─────────────────────────────────────────────────────────┐   │
│         Für alle zu berechnenden Korrelationspunkte:       │◄─┐│
└─────────────────────────────────────────────────────────┘  ││
                            ↓                                  ││
┌─────────────────────────────────────────────────────────┐  ││
│   Sortiere die Templates, die zur Template-Kategorie z     │  ││
│   gehören, nach absteigenden Korrelationswerten.           │  ││
└─────────────────────────────────────────────────────────┘  ││
                            ↓                                  ││
┌─────────────────────────────────────────────────────────┐  ││
│   Sortiere die Templates, die nicht zur Template-Kategorie z│  ││
│   gehören, nach aufsteigenden Korrelationswerten.          │  ││
└─────────────────────────────────────────────────────────┘  ││
                            ↓                                  ││
┌─────────────────────────────────────────────────────────┐  ││
│       Berechne einen neuen Korrelationspunkt (Abb. 6).     │  ││
└─────────────────────────────────────────────────────────┘  ││
                            ↓                                  ││
┌─────────────────────────────────────────────────────────┐  ││
│   Füge diesen Korrelationspunkt zur Korrelationspunktmenge │  ││
│   hinzu.                                                    │  ││
└─────────────────────────────────────────────────────────┘  ││
                            ↓                                  ││
┌─────────────────────────────────────────────────────────┐  ││
│   Berechne die Korrelationswerte für alle Templates und alle│  ││
│   Verschiebungen zur Template-Kategorie z.                 │  ││
└─────────────────────────────────────────────────────────┘  ││
                            ↓                                  ││
┌─────────────────────────────────────────────────────────┐  ││
│   Berechne die Korrelationswerte für alle Templates und alle│  ││
│   Verschiebungen zu den Template-Kategorien ungleich z.    │  ││
└─────────────────────────────────────────────────────────┘  ││
                            ↓                                  ││
        ◇ Weitere Korrelationspunkte berechnen? ◇ ──ja────────┘│
                            ↓ nein                               │
        ◇ Weitere Template-Kategorien? ◇ ──ja──────────────────┘
                            ↓ nein
┌─────────────────────────────────────────────────────────┐
│   Ende der optimierten Berechnung der Korrelationspunkte.  │
└─────────────────────────────────────────────────────────┘
```

**Fig. 5**

Start der Berechnung eines neuen Korrelationspunkts.

Für alle Korrelationspunktkandidaten:

Berechne den kleinsten Korrelationswert für das Template, das nicht zur Template-Kategorie $z$ gehört und beim vorigen Korrelationspunkt den kleinsten Korrelationswert aufwies.

Für je ein (das nächste) zur Template-Kategorie $z$ gehöriges und ein (das nächste) nicht zur Template-Kategorie $z$ gehöriges Template (solange bis alle Templates abgearbeitet sind):

Berechne den maximalen Korrelationswert für das Template (sofern vorhanden) zur Template-Kategorie $z$.

Berechne den minimalen Korrelationswert für das Template (sofern vorhanden), das nicht zur Template-Kategorie $z$ gehört.

Berechne den Schätzwert für das Korrelationsmaß.

Ist der Schätzwert größer als der bisher beste Korrelationsmaßwert? — ja

nein

Weitere Templates? — ja

nein

Der Korrelationspunkt-Kandidat wird mit seinem Korrelationsmaßwert zum bisher besten.

Weitere Korrelationspunkt-Kandidaten? — ja

nein

Ende der Berechnung eines neuen Korrelationspunkts.

**Fig. 6**

Fig. 7